(19) **Europäisches Patentamt / European Patent Office / Office européen des brevets**

(11) **EP 4 645 567 A1**

(12) **EUROPEAN PATENT APPLICATION**
published in accordance with Art. 153(4) EPC

(43) Date of publication:
05.11.2025 Bulletin 2025/45

(21) Application number: 23912255.9

(22) Date of filing: 27.12.2023

(51) International Patent Classification (IPC):
$H01M\ 50/417^{(2021.01)}$     $H01G\ 11/52^{(2013.01)}$
$H01M\ 50/434^{(2021.01)}$     $H01M\ 50/443^{(2021.01)}$
$H01M\ 50/446^{(2021.01)}$     $H01M\ 50/451^{(2021.01)}$
$H01M\ 50/457^{(2021.01)}$     $H01M\ 50/46^{(2021.01)}$
$H01M\ 50/489^{(2021.01)}$     $H01M\ 50/491^{(2021.01)}$

(52) Cooperative Patent Classification (CPC):
H01G 11/52; H01M 50/417; H01M 50/434;
H01M 50/443; H01M 50/446; H01M 50/451;
H01M 50/457; H01M 50/46; H01M 50/489;
H01M 50/491; Y02E 60/10

(86) International application number:
PCT/JP2023/046961

(87) International publication number:
WO 2024/143477 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 JP 2022212392

(71) Applicant: Asahi Kasei Battery Separator
Corporation
Tokyo 100-0006 (JP)

(72) Inventors:
• MORISHITA, Tomofumi
Tokyo 100-0006 (JP)
• NAKAGAWA, Yoshitaka
Tokyo 100-0006 (JP)

(74) Representative: Dompatent
Partnerschaft von Patent- und Rechtsanwälten
mbB
Deichmannhaus am Dom
Bahnhofsvorplatz 1
50667 Köln (DE)

(54) **SEPARATOR FOR POWER STORAGE DEVICE**

(57)    Provided is a separator for a power storage device, the separator comprising a polyolefin microporous film that has a first principal surface and a second principal surface. The water contact angle of the first principal surface is 43°-118°, and when the absorbance of the first principal surface from 600 cm$^{-1}$ to 4000 cm$^{-1}$ is measured by ATR-IR measurement, the ratio of the absorption peak height at 1715 cm$^{-1}$ and the absorption peak height at 1472 cm$^{-1}$ is 0.0020-0.0280. The porosity of the polyolefin microporous film is 30%-65%.

EP 4 645 567 A1

## Description

FIELD

The present invention relates to a separator for a power storage device, and the like.

BACKGROUND

In recent years, development of power storage devices typified by nonaqueous electrolyte batteries has been actively carried out. Nonaqueous electrolyte battery such as lithium-ion batteries usually include a microporous membrane provided as a separator between a positive electrode and a negative electrode. Such a separator has functions of preventing direct contact between the positive electrode and the negative electrode, and allowing ions to pass through an electrolyte solution held in micropores.

The separator is required to improve adhesiveness to an electrode from viewpoints of making charge and discharge currents uniform and inhibiting lithium dendrite in addition to conventionally required performance related to safety, such as performance (fuse characteristic) in which a battery reaction is rapidly stopped in a case of abnormal heating and performance (short circuit property) in which a shape is maintained even at a high temperature to prevent a dangerous situation of a direct reaction between a positive electrode substance and a negative electrode substance.

In assembly of a power storage device, a wound body of a separator and an electrode may be produced, and then the separator and the electrode may be crimped in order to maintain a molding state of the wound body before the wound body is inserted into a housing such as a can. A crimp condition has been conventionally determined according to surface roughness of an electrode. For example, crimping may be carried out under a condition where temperature is 20°C to 40°C, pressure is 10 to 30 MPa, and time is 3 seconds to 10 seconds.

After insertion of the wound body into the housing, the power storage device may be formed by injecting an electrolyte solution into the wound body in the housing. For example, PTL 1 discloses that a thermoplastic polymer layer is provided as an adhesive layer on a surface of a polyolefin microporous membrane in order to improve an adhesive property between an electrode and a separator in presence of an electrolyte solution.

[CITATION LIST]

[PATENT LITERATURE]

[PTL 1] International Patent Publication No. WO2014/017651

SUMMARY

[TECHNICAL PROBLEM]

The separator for a power storage device described in PTL 1 tends to have a poor injection property (i.e., long injection time) in an electrolyte solution injection step due to presence of the adhesive layer.

Further, even in a crimp step under the condition where temperature is 20°C to 40°C, pressure is 10 to 30 MPa, and time is 3 seconds to 10 seconds as described above, it is required to not only achieve more satisfactory maintenance a molding state of a wound body after the crimp step but also improve an injection property of the electrolyte solution.

However, in the conventional separator for a power storage device including a microporous membrane as a base material and the adhesive layer formed on the base material, an improvement in adhesive force during pressing between the electrode and the separator and during winding and an improvement in an injection property of the electrolyte solution are in a trade-off relationship, making it difficult to achieve both of the improvements.

The present invention has been made in view of the circumstances described above and has an object to provide a separator for a power storage device that can achieve both of an adhesive property during pressing between an electrode and the separator, and an injection property of an electrolyte solution, and to provide the power storage device including the separator.

[SOLUTION TO PROBLEM]

As a result of much research, the present inventors have found that the problem described above can be solved by specifying a water contact angle of a polyolefin microporous membrane, a light absorption property, a porosity, or an exposure proportion of at least one side in a separator for a power storage device. In other words, the present invention is as follows.

[1] A separator for a power storage device includes

a polyolefin microporous membrane including a first main surface and a second main surface, wherein a water contact angle of the first main surface is 43° or more and 118° or less, and, when measurement of absorbance in 600 cm$^{-1}$ or more and 4,000 cm$^{-1}$ or less is carried out on the first main surface by ATR-IR measurement, a ratio between an absorption peak height in 1,715 cm$^{-1}$ and an absorption peak height in 1,472 cm$^{-1}$ is 0.0020 or more and 0.0280 or less, and a porosity of the polyolefin microporous membrane is 30% or more and 65% or less.

[2] The separator for a power storage device according to aspect 1, wherein an indentation elastic modulus of the first main surface is 10,000 N/mm$^2$ or more and 55,000 N/mm$^2$ or less.

[3] A separator for a power storage device includes

a polyolefin microporous membrane including a first main surface and a second main surface, wherein a water contact angle of the first main surface is 43° or more and 118° or less, at a time of observation from above in a vertical direction on a side opposite to the second main surface with respect to the first main surface, when a proportion of exposure of a region satisfying the water contact angle in the first main surface of 43° or more and 118° or less is set as R$_{expose}$, the R$_{expose}$ is 34 area% or more and less than 100 area%, a first coating layer is provided on the first main surface, and a porosity of the polyolefin microporous membrane is 30% or more and 65% or less.

[4] The separator for a power storage device according to aspect 3, wherein an indentation elastic modulus of the first main surface is 10,000 N/mm$^2$ or more and 55,000 N/mm$^2$ or less.

[5] The separator for a power storage device according to any one of aspects 1 to 4, wherein, when measurement of absorbance in 600 cm$^{-1}$ or more and 4,000 cm$^{-1}$ or less is carried out on the first main surface by ATR-IR measurement, a ratio between an absorption peak height in 1,715 cm$^{-1}$ and an absorption peak height in 1,472 cm$^{-1}$ is 0.0020 or more and 0.0130 or less.

[6] The separator for a power storage device according to any one of aspects 3 to 5, wherein a total coverage area ratio of the first coating layer to the first main surface exceeds 0 area% and is 66 area% or less.

[7] The separator for a power storage device according to any one of aspects 3 to 6, wherein the first coating layer is a thermoplastic resin layer.

[8] The separator for a power storage device according to any one of aspect 3 to 7, wherein a thermoplastic resin included in the first coating layer is a particulate polymer.

[9] The separator for a power storage device according to any one of aspects 3 to 8, wherein

a second coating layer is provided on the second main surface, and the second coating layer is at least one of an inorganic coating layer, a thermoplastic resin layer, and a mixed layer of an inorganic filler and a thermoplastic resin in a proportion of 3:7 to 7:3 at a weight ratio.

[10] The separator for a power storage device according to any one of aspects 3 to 9, wherein an inorganic coating layer and a thermoplastic resin layer are provided on a side of the second main surface with reference to the polyolefin microporous membrane.

[11] The separator for a power storage device according to aspect 9 or 10, wherein a thermoplastic resin included in the second coating layer is a particulate polymer.

[12] The separator for a power storage device according to any one of aspects 1 to 11, wherein the separator for a power storage device does not include an inorganic coating layer on the first main surface.

[13] The separator for a power storage device according to any one of aspects 1 to 12, wherein the first main surface is to be in contact with or opposite to a negative electrode.

[14] The separator for a power storage device according to any one of aspects 1 to 13, wherein the second main surface is to be in contact with or opposite to a positive electrode.

[15] The separator for a power storage device according to any one of aspects 1 to 14, wherein the separator for a power storage device does not include an inorganic coating layer on the first main surface.

[16] The separator for a power storage device according to any one of aspects 1 to 15, wherein a water contact angle of the first main surface is 95° or more and 110° or less.

[17] A power storage device includes the separator for a power storage device according to any one of aspects 1 to 16.

[18] The separator for a power storage device according to any one of aspects 1 to 15, wherein

the separator for a power storage device does not include an inorganic coating layer on the first main surface, and the first main surface is to be in contact with or opposite to a negative electrode.

[19] A power storage device includes the separator for a power storage device according to aspect 18.

[20] A method for manufacturing a power storage device includes steps (1) to (5) below:

(1) preparing a separator for a power storage device including a polyolefin microporous membrane including a first main surface and a second main surface, wherein

a water contact angle of the first main surface is 43° or more and 118° or less, and, when measurement of absorbance in 600 $cm^{-1}$ or more and 4,000 $cm^{-1}$ or less is carried out on the first main surface by ATR-IR measurement, a ratio between an absorption peak height in 1,715 $cm^{-1}$ and an absorption peak height in 1,472 $cm^{-1}$ is 0.0020 or more and 0.0280 or less, and a porosity of the polyolefin microporous membrane is 30% or more and 65% or less;

(2) acquiring a wound body by laminating the separator in an order of positive electrode-separator-negative electrode-separator or negative electrode-separator-positive electrode-separator and winding into a circular or flat spiral shape, or a step of acquiring a laminated body acquired by lamination in a flat plate shape in an order of positive electrode-separator-negative electrode-separator or negative electrode-separator-positive electrode-separator;
(3) heating and/or pressing the wound body or the laminated body;
(4) housing the wound body or the laminated body in a battery can; and
(5) injecting an electrolyte solution into the battery can.

[21] A method for manufacturing a power storage device includes steps (1) to (5) below:

(1) preparing a separator for a power storage device including a polyolefin microporous membrane including a first main surface and a second main surface, wherein

a water contact angle of the first main surface is 43° or more and 118° or less, at a time of observation from above in a vertical direction on a side opposite to the second main surface with respect to the first main surface, when a proportion of exposure of a region satisfying the water contact angle in the first main surface of 43° or more and 118° or less is set as $R_{expose}$, the $R_{expose}$ is 34 area% or more and less than 100 area%, a first coating layer is provided on the first main surface, and a porosity of the polyolefin microporous membrane is 30% or more and 65% or less;

(2) acquiring a wound body by laminating the separator in an order of positive electrode-separator-negative electrode-separator or negative electrode-separator-positive electrode-separator and winding into a circular or flat spiral shape, or a step of acquiring a laminated body acquired by lamination in a flat plate shape in an order of positive electrode-separator-negative electrode-separator or negative electrode-separator-positive electrode-separator;
(3) heating and/or pressing the wound body or the laminated body;
(4) housing the wound body or the laminated body in a battery can; and
(5) injecting an electrolyte solution into the battery can.

Other aspects of the present invention are as follows.

[22] A power storage device includes a positive electrode, a negative electrode, the separator for a power storage device according to any one of aspects 1 to 16, 18, and 19, and an electrolyte solution, wherein

an inorganic coating layer is not provided on the first main surface, and the first main surface is in contact with or opposite to the negative electrode.

[23] The power storage device according to aspect 22, wherein the first main surface is in contact with the negative electrode.

[24] A use of the separator for a power storage device according to any one of aspects 1 to 16, 18, and 19 in a power storage device.

[25] The use according to aspect 24, wherein

an inorganic coating layer is not provided on the first main surface of the separator for a power storage device, and the first main surface is in contact with or opposite to a negative electrode of the power storage device.

[26] The use according to aspect 24 or 25, wherein
the first main surface is in contact with the negative electrode.

[27] A use of the separator for a power storage device according to any one of aspects 1 to 16, 18, and 19 in manufacturing of a power storage device.

[28] The use according to aspect 27, wherein

an inorganic coating layer is not provided on the first main surface of the separator for a power storage device, and the first main surface is disposed in such a way as to be in contact with or opposite to a negative electrode of the power storage device.

[29] The use according to aspect 27 or 28, wherein
the first main surface is disposed in such a way as to be in contact with the negative electrode.

[ADVANTAGEOUS EFFECTS OF INVENTION]

The present invention can provide a separator for a power storage device that can achieve both of an adhesive property during pressing to an electrode, such as, for example, a dry adhesive property during pressing to an electrode, and an injection property of an electrolyte solution, and provide the power storage device including the separator.
According to the present invention, predetermined adhesive strength can be acquired without using an adhesive in adhesion between an electrode and a polyolefin microporous membrane separator that has been particularly commonly understood.

DESCRIPTION OF EMBODIMENTS

An embodiment (hereinafter referred to as the "present embodiment") for implementing the present invention will be described below in detail. Note that the present invention is not limited to the embodiment below and can be implemented while various modifications are made within the scope of the purpose of the present invention.
In the present specification, MD indicates a machine direction of a polyolefin microporous membrane, and TD indicates a direction crossing the MD of the polyolefin microporous membrane at an angle of 90°.
In the present specification, an injection property is ease of permeation of an electrolyte solution to an electrode and a separator in an electrolyte solution injection step in a cell assembly of a power storage device using the separator and is represented as a length of time required from a start of injection to completion of permeation.

<Separator for Power Storage Device>

A first aspect of a separator for a power storage device (hereinafter also simply referred to as a "separator") according to the present embodiment includes a polyolefin microporous membrane including a first main surface and a second main surface, wherein a water contact angle of the first main surface is 43° or more and 118° or less, and, when measurement of absorbance in 600 $cm^{-1}$ or more and 4,000 $cm^{-1}$ or less is carried out on the first main surface by ATR-IR measurement, a ratio between an absorption peak height in 1,715 $cm^{-1}$ and an absorption peak height in 1,472 $cm^{-1}$ is 0.0020 or more and 0.0280 or less.
Further, a second aspect of a separator for a power storage device according to the present embodiment includes a polyolefin microporous membrane including a first main surface and a second main surface, wherein a porosity of the polyolefin microporous membrane is 30% or more and 65% or less, a water contact angle of the first main surface is 43° or more and 118° or less, at a time of observation from above in a vertical direction on a side opposite to the second main surface with respect to the first main surface, when a proportion of exposure of a region satisfying the water contact angle in the first main surface of 43° or more and 118° or less is set as $R_{expose}$, the $R_{expose}$ is 34 area% or more and less than 100 area%, and a first coating layer is provided on the first main surface. As desired, the separator may include a second coating layer on the second main surface.

As desired, the features of the separator according to the first and second aspects may be combined. Specifically, the separator in which the porosity of the polyolefin microporous membrane, the water contact angle of the first main surface, the ratio of the absorption peak height in 1,715 cm$^{-1}$ and 1,472 cm$^{-1}$, R$_{expose}$, and the first coating layer are specified as described above can be provided.

(Relationship among First Main Surface, Coating Layer, and Porosity)

In the separator according to the present embodiment, since a porosity of the polyolefin microporous membrane is 30% or more and 65% or less, wettability, followability to an electrode, and an injection property of an electrolyte solution are satisfactory. Then, when a proportion R$_{expose}$ of exposure of a region satisfying a water contact angle in the first main surface of 43° or more and 118° or less is 34 area% or more and less than 100 area%, the injection property of the electrolyte solution tends to be satisfactory while an adhesive property to the electrode on the first main surface side is maintained, and thus both of the adhesive property during pressing to the electrode such as, for example, a dry adhesive property during pressing, and the injection property of the electrolyte solution can be achieved.

For example, in a power storage device assembly process, the tendency described above is conspicuous when the first main surface having R$_{expose}$ of 34 area% or more and less than 100 area% is in contact with or opposite to a negative electrode.

In the separator according to the present embodiment, even when the first coating layer is provided on the first main surface side of the polyolefin microporous membrane in such a way that R$_{expose}$ described above is 34 area% or more and less than 100 area%, or the first coating layer is not provided, sufficient adhesive strength to an electrode such as, for example, dry adhesive force is acquired in a step of crimping and molding a laminated body or a wound body of the electrode having high surface roughness and the separator at temperature of 20°C to 40°C and pressure of 10 to 30 MPa and for 3 seconds to 10 seconds, for example, moldability of the laminated body or the wound body is maintained in a step of putting the laminated body or the wound body into a device housing, and there is no first coating layer or a coverage factor is significantly adjusted in a subsequent step of injecting an electrolyte solution, and thus injection time can be shortened.

For example, for the first main surface that satisfies the condition of R$_{expose}$ described above in the power storage device or even during use of the power storage device and for the second coating layer on the second main surface, the separator according to the present embodiment can inhibit peeling between the separator and the electrode, and can achieve a satisfactory life property of the power storage device. Furthermore, the separator achieves both of the adhesive property and the injection property, which also contributes to an improvement in productivity of the power storage device including the separator.

In the present embodiment, a structure of the separator that can achieve both of the adhesive property during pressing to the electrode and the injection property of the electrolyte solution is specified by the facts that the porosity of the polyolefin microporous membrane is 30% or more and 65% or less, and the proportion R$_{expose}$ of exposure of the region satisfying the water contact angle in the first main surface of 43° or more and 118° or less is 34 area% or more and 100 area% or less. With no intention to be limited to any particular theory, a functional group more likely to physically or chemically interact with an electrode surface such as, for example, a hydroxyl group or a carboxyl group is conceivably generated or increased in the region satisfying the condition where the water contact angle of the first main surface of the polyolefin microporous membrane having the porosity of 30% or more and 65% or less is 43° or more and 118° or less. On the other hand, an excessive functional group amount on the surface of the polyolefin microporous membrane may cause a side reaction in the power storage device and decrease a cycle characteristic, and thus optimization of the functional group amount is considered in the present embodiment. In the present embodiment, when the water contact angle of one surface of the polyolefin microporous membrane is calculated to be 43° or more and 118° or less by a measurement method described in an example, a proportion of exposure of the polyolefin microporous membrane from a measurement surface at the water contact angle may be evaluated as R$_{expose}$ described above.

From a viewpoint of achieving both of the adhesive property by the separator and the injection property, a viewpoint of interaction with the electrode surface, and a viewpoint of inhibiting a decrease in the cycle characteristic of a battery, the water contact angle of the first main surface of the polyolefin microporous membrane is preferably 50° or more and 118° or less, more preferably 60° or more and 118° or less, further preferably 70° or more and 116° or less, still further preferably 85° or more and 114° or less, particularly preferably 95° or more and 110° or less, and most preferably 100° or more and 106° or less. The water contact angle of the polyolefin microporous membrane can be adjusted within the numerical value range described above by any surface treatment. Examples of the surface treatment of the first main surface include, for example, a corona discharge treatment method, a plasma treatment method, a solvent treatment method, an acid treatment method, an ultraviolet oxidation method, a denaturation treatment method of a surface functional group, an increase/decrease treatment method of a surface functional group amount, a fluorine treatment method, and the like, and the corona discharge treatment is particularly preferably carried out from a viewpoint of controlling the water contact angle.

The water contact angle of the first main surface of the polyolefin microporous membrane in the present embodiment needs to be measured before assembly in a battery being a final product, but, even when the water contact angle is measured after disassembly of the battery product, no great change is conceivably seen from stability of polyolefin being a resin material.

At a time of observation from above in a vertical direction on a side opposite to the second main surface with respect to the first main surface of the polyolefin microporous membrane, the proportion $R_{expose}$ (area%) of exposure of the region satisfying the water contact angle in the first main surface of 43° or more and 118° or less can be calculated backwards from a total coverage area ratio (area%) of the first coating layer to the first main surface. In other words, as an actual measurement method, calculation can be carried out by the following formula:

$R_{expose}$ (area%) = 100 (area%) - (total coverage area ratio (area%) of first coating layer with respect to first main surface). For the polyolefin microporous membrane, whether the region satisfying the water contact angle of 43° or more and 118° or less is exposed can be confirmed by an analysis method combining an optical microscope with an organic chemistry analysis technique, such as, for example, an apparatus (may be generically referred to as a microscope IR) combining an infrared microscope with a Fourier transform infrared spectroscopic device (FT-IR), and a qualitative analysis (may be generically referred to as a microscopic Raman spectroscopic method) combining an optical microscope with a Raman spectroscopic method. For the polyolefin microporous membrane, when there is an exposed portion departing from the range of the water contact angle described above, an appropriate value of "$R_{expose}$ (area%)" can be obtained by further appropriately excluding the portion from the formula described above.

When $R_{expose}$ described above is 100 area%, there is no first coating layer on the first main surface, which is preferable from the viewpoint of achieving both of the adhesive property by the separator and the injection property and a viewpoint of the productivity of the power storage device including the separator. When $R_{expose}$ described above is 34 area% or more and less than 100 area%, the first coating layer is provided on the first main surface, and then $R_{expose}$ is preferably 50 area% or more and 99.99 area% or less, more preferably 70 area% or more and 99 area% or less, further preferably 85 area% or more and 99 area% or less, particularly preferably 95.1 area% or more and 99 area% or less, and most preferably 98 area% or more and 99 area% or less. The case where $R_{expose}$ is 100 area% is the most preferable from the viewpoint of achieving both of the adhesive property by the separator and the injection property. $R_{expose}$ described above can be adjusted by control of, for example, a manufacturing condition of the polyolefin microporous membrane, presence or absence of coating on the first main surface by a coating solution, a coating condition of the first main surface by the coating solution, a coating method, and the like.

An indentation elastic modulus of the first main surface described above is preferably 10,000 N/mm$^2$ or more and 55,000 N/mm$^2$ or less, more preferably 15,000 N/mm$^2$ or more and 45,000 N/mm$^2$ or less, and further preferably 20,000 N/mm$^2$ or more and 40,000 N/mm$^2$ or less from a viewpoint of a satisfactory balance between adhesive force and inhibition of heat shrinkage and a viewpoint of the adhesive property during pressing to the electrode such as, for example, the dry adhesive property during pressing.

(Light Absorption Property in ATR-IR Measurement)

When measurement of absorbance in 600 cm$^{-1}$ or more and 4,000 cm$^{-1}$ or less is carried out on the first main surface described above by ATR-IR measurement, a ratio between an absorption peak height in 1,715 cm$^{-1}$ and an absorption peak height in 1,472 cm$^{-1}$ is preferably 0.0000 or more and 0.0500 or less. With no intention to be limited to any particular theory, the ratio 1,715 cm$^{-1}$/1,472 cm$^{-1}$ between the absorption peak height in 1,715 cm$^{-1}$ and the absorption peak height in 1,472 cm$^{-1}$ represents an absorbance ratio of carbonyl to polyethylene in an ATR-IR measurement chart. An adjustment of the ratio of the absorption peak height to 0.0000 or more and 0.0500 or less leads to optimization of a functional group on the first main surface described above, and thus adhesive force and an improvement in the cycle characteristic of the power storage device can be balanced. From such a viewpoint, a ratio of the absorption peak height of the first main surface in the ATR-IR measurement is more preferably exceeding 0.0000 and 0.0500 or less, further preferably 0.0010 or more and 0.0300 or less, still further preferably 0.0020 or more and 0.0280 or less, still more further preferably 0.0020 or more and 0.0140 or less, or 0.0020 or more and 0.0140 or less or 0.0020 or more and 0.0130 or less, and particularly preferably 0.0030 or more and 0.0120 or less. In the present specification, when a peak of a carbonyl group is not observed in the ATR-IR measurement, the above-described ratio 1,715 cm$^{-1}$/1,472 cm$^{-1}$ is 0.0000.

In the separator according to the first aspect, when the ratio of the absorption peak height in 1,715 cm$^{-1}$ and 1,472 cm$^{-1}$ in the ATR-IR measurement described above falls within a range of 0.0020 (inclusive) to 0.0280 (inclusive) in addition to the water contact angle of the first main surface of 43° (inclusive) to 118° (inclusive) and the porosity of the polyolefin microporous membrane of 30% (inclusive) to 65% (inclusive), both of the adhesive property during pressing to the electrode such as, for example, the dry adhesive property during pressing to the electrode, and the injection property of the electrolyte solution tend to be achieved, and predetermined adhesive strength can be acquired without using an adhesive particularly in adhesion between the electrode and the separator. This tendency is conspicuous when there is no inorganic coating layer on the first main surface and/or the first main surface is in contact with or opposite to the negative electrode in, for example, a manufacturing or assembly process of the power storage device.

The ratio between the absorption peak height in 1,715 $cm^{-1}$ and the absorption peak height in 1,472 $cm^{-1}$ of the first main surface of the polyolefin microporous membrane in the present embodiment needs to be measured before assembly in a battery being a final product, but, even when the ratio is measured after disassembly of the battery product, no great change is conceivably seen from stability of polyolefin being a resin material.

A component of the separator according to the present embodiment will be described below.

<Polyolefin Microporous Membrane>

The polyolefin microporous membrane in the present embodiment is in form of a film, and thus includes a front surface and a rear surface, i.e., the first main surface and the second main surface.

The polyolefin microporous membrane in the present embodiment has the porosity of 30% or more and 65% or less from the viewpoint of being able to achieve both the adhesive property during pressing between the separator and the electrode and the injection property of the electrolyte solution. A lower limit value of the porosity of the polyolefin microporous membrane is preferably 35% or more and more preferably 40% or more from a viewpoint of securing permeability of the separator and the adhesive force, and an upper limit value is preferably 60% or less, more preferably 55% or less, and further preferably 50% or less from a viewpoint of puncture strength, a viewpoint of inhibiting heat shrinkage, and a viewpoint of reducing an electrolyte solution filling amount and then shortening an injection time. Note that the porosity can be adjusted by changing a draw ratio and a heat setting temperature, and the like.

The polyolefin microporous membrane has a configuration not particularly limited, and may be, for example, a microporous membrane formed of a polyolefin resin composition containing polyolefin, and is preferably a porous membrane including a polyolefin resin as the main component. A content of the polyolefin resin in the polyolefin microporous membrane in the present embodiment is not particularly limited, and the polyolefin microporous membrane is preferably a porous membrane formed of a polyolefin resin composition in which the polyolefin resin constitutes 50% or more and 100% or less of a weight fraction of the whole components forming the porous membrane from a point of shutdown performance and the like in a case of use as the separator for a power storage device. A proportion constituted by the polyolefin resin is more preferably 60% or more and 100% or less, and further preferably 70% or more and 100% or less.

The polyolefin resin is not particularly limited, and indicates a polyolefin resin used for normal extrusion, ejection, inflation, blow molding, and the like, and a homopolymer, a copolymer, a multistage polymer, and the like of ethylene, propylene, 1-butene, 4-methyl-1-pentene, 1-hexene, 1-octene and the like can be used. Further, polyolefin selected from a group formed of the homopolymer, the copolymer, and the multistage polymer can also be used alone or in admixture.

Representative examples of the polyolefin resin are not particularly limited, and include, for example, polyethylene such as low-density polyethylene, linear low-density polyethylene, medium-density polyethylene, high-density polyethylene, and ultrahigh molecular weight polyethylene, isotactic polypropylene, atactic polypropylene, ethylene-propylene random copolymer, polybutene, ethylene propylene rubber, and the like.

When the separator in the present embodiment is used as a battery separator, it is preferable to use a resin mainly formed of polyethylene and particularly high-density polyethylene, for a low melting point and high strength. The high-density polyethylene indicates polyethylene having a density of 0.942 $g/cm^3$ or more being measured according to JIS K 7112.

From a viewpoint of improving heat resistance of the porous membrane, it is more preferable to use a porous membrane formed of a resin composition including polypropylene and a polyolefin resin other than polypropylene. Herein, a spatial structure of polypropylene is not limited, and may be any of isotactic polypropylene, syndiotactic polypropylene, and atactic polypropylene.

A proportion of polypropylene to total polyolefin in a polyolefin resin composition is not particularly limited, and is preferably 1 weight% or more and 35 weight% or less, more preferably 3 weight% or more and 20 weight% or less, and further preferably 4 weight% or more and 10 weight% or less from a viewpoint of achieving both of heat resistance and a satisfactory shutdown function. In this case, a polyolefin resin other than polypropylene is not limited, and examples include, for example, a homopolymer or a copolymer of olefin hydrocarbon such as ethylene, 1-butene, 4-methyl-1-pentene, 1-hexene, and 1-octene. Specific examples include polyethylene, polybutene, ethylene-propylene random copolymers, and the like.

From a viewpoint of the shutdown property in which a hole is blocked by heat fusion, polyethylene such as low-density polyethylene, linear low-density polyethylene, medium-density polyethylene, high-density polyethylene, and ultrahigh molecular weight polyethylene is preferably used as the polyolefin resin other than polypropylene. Particularly, from a viewpoint of strength, it is more preferable to use polyethylene having a density of 0.93 $g/cm^3$ or more and 0.97 $g/cm^3$ or less being measured according to JIS K 7112.

A viscosity average molecular weight of the polyolefin resin forming the polyolefin microporous membrane is not particularly limited, and is preferably 30,000 or more and 12,000,000 or less, more preferably 50,000 or more and less than 2,000,000, further preferably 100,000 or more and less than 1,200,000, and most preferably 500,000 or more and less than 1,000,000. When the viscosity average molecular weight is 30,000 or more, there are tendencies that melt tension during melt molding increases and moldability becomes satisfactory, and strength is also increased by entanglement between polymers, which are preferable. On the other hand, when the viscosity average molecular weight is 12,000,000 or less, there are tendencies that uniform melt kneading is easy, and moldability of a sheet, particularly, thickness stability becomes excellent, which are preferable. Furthermore, when the viscosity average molecular weight is less than 1,000,000, there are tendencies that a hole is easily blocked during a temperature rise, and a satisfactory shutdown function is acquired, which are preferable. Note that, for example, instead of using only polyolefin having a viscosity average molecular weight less than 1,000,000, a mixture of polyolefin having a viscosity average molecular weight of 2,000,000 and polyolefin having a viscosity average molecular weight of 270,000, whose viscosity average molecular weight is less than 1,000,000, may be used.

The polyolefin microporous membrane in the present embodiment can contain any additives. Such additives are not particularly limited, and examples include, for example, polymers other than polyolefin; inorganic particles; phenol-based, phosphorus-based, and sulfur-based antioxidants; metal soaps such as calcium stearate and zinc stearate; ultraviolet absorbents; light stabilizers; antistatic agents; anti-fogging agents; color pigments; and the like. A total content of the additives is preferably 20 parts by weight or less, more preferably 10 parts by weight or less, and further preferably 5 parts by weight or less with respect to 100 parts by weight of the polyolefin resin composition.

Puncture strength in terms of a basis weight ($g/m^2$) of the polyolefin microporous membrane (hereinafter referred to as basis weight-equivalent puncture strength) is preferably 50 $gf/(g/m^2)$ or more, or 60 $gf/(g/m^2)$ or more. The polyolefin microporous membrane having the basis-weight equivalent puncture strength 50 $gf/(g/m^2)$ or more, or 60 $gf/(g/m^2)$ or more tends to be less likely to rupture in safety testing of the power storage device. From a viewpoint of improving the injection property of the electrolyte solution, the adhesive property to the electrode, safety of the power storage device, and the like while maintaining strength of the polyolefin microporous membrane, the basis weight-equivalent puncture strength is more preferably 70 $gf/(g/m^2)$ or more and further preferably 80 $gf/(g/m^2)$ or more. The basis weight-equivalent puncture strength is not limited, and can be set to, for example, 200 $gf/(g/m^2)$ or less, 150 $gf/(g/m^2)$ or less, or 140 $gf/(g/m^2)$ or less. Note that CCS units of "gf" can be converted into SI units of "N" according to the formula: 1 gf ≈ 0.0098N.

The puncture strength that is not in terms of the basis weight of the polyolefin microporous membrane (hereinafter simply referred to as puncture strength) has a lower limit value of preferably 100 gf or more, more preferably 200 gf or more, and further preferably 300 gf or more. The puncture strength of 100 gf or more is preferable from a viewpoint of inhibiting a rupture of the polyolefin microporous membrane in safety testing. The puncture strength of the polyolefin microporous membrane has an upper limit value of preferably 1000 gf or more, more preferably 800 gf or more, and further preferably 700 gf or more from a viewpoint of stability during film formation. The lower limit value of the puncture strength can be set according to stable production of film formation and battery manufacturing, a balance between the porosity and the water contact angle described above, and the like. The upper limit value is set in balance with other properties. The puncture strength can be increased by increasing orientation of molecular chains by application of shearing force or drawing of a molded product during extrusion, but, since increasing the strength also impairs thermal stability due to an increase in residual stress, the puncture strength is controlled according to a purpose.

A thickness of the polyolefin microporous membrane is not particularly limited, and is preferably 6 μm or more, more preferably 8 μm or more, further preferably 10 μm or more, and still further preferably 12 μm or more, and an upper limit thereof is preferably 30 μm or less, more preferably 20 μm or less, further preferably 16 μm or less, still further preferably 14 μm or less, and particularly preferably 12 μm or less. The film thickness is preferably 6 μm or more from a viewpoint of improving mechanical strength. On the other hand, the film thickness is preferably 30 μm or less since a volume occupied by the separator is reduced, and thus it tends to be advantageous in a point of increasing the capacity of a battery.

Air permeability of the polyolefin microporous membrane is not particularly limited, and is preferably 10 sec/100 $cm^3$ or more, more preferably 20 sec/100 $cm^3$ or more, further preferably 30 sec/100 $cm^3$ or more, and most preferably 40 sec/100 $cm^3$ more, and is preferably 300 sec/100 $cm^3$ or less, more preferably 200 sec/100 $cm^3$ or less, further preferably 180 sec/100 $cm^3$ or less, and still further preferably 140 sec/100 $cm^3$ or less. The air permeability is preferably 10 sec/100 $cm^3$ or more from a viewpoint of inhibiting self-discharge of the power storage device. On the other hand, the air permeability is preferably 500 sec/100 $cm^3$ or less from a viewpoint of acquiring satisfactory charge and discharge characteristics. Note that the air permeability described above can be adjusted by changing a draw temperature and a draw ratio, and the like.

A mean pore size of the polyolefin microporous membrane in the present embodiment is preferably 0.15 μm or less and more preferably 0.1 μm or less, and a lower limit is preferably 0.01 μm or more. The mean pore size is preferably 0.15 μm or less from viewpoints of inhibiting self-discharge of the power storage device and inhibiting a capacity decrease in a case of the separator for a power storage device. The mean pore size can be adjusted by changing a draw ratio when the polyolefin microporous membrane is manufactured, and the like.

A short-circuit temperature as an indicator of heat resistance of the polyolefin microporous membrane is preferably 140°C or higher, more preferably 150°C or higher, and further preferably 160°C or higher. The short-circuit temperature is preferably 140°C or higher from a viewpoint of safety of the power storage device in a case of the separator for a power storage device.

A viscosity average molecular weight of the polyolefin microporous membrane is not particularly limited, and is preferably 100,000 or more and 5,000,000 or less, more preferably 300,000 or more and 1,500,000 or less, and further preferably 500,000 or more and 1,000,000 or less. The viscosity average molecular weight is preferably 100,000 or more and 5,000,000 or less from a viewpoint of the puncture strength, permeability, heat shrinkage, and a shutdown function of the polyolefin microporous membrane.

(Method for Manufacturing Polyolefin Microporous Membrane)

A method for manufacturing the polyolefin microporous membrane in the present embodiment is not particularly limited, and a known manufacturing method can be adopted. Examples include, for example, a method for making it porous by melt kneading a polyolefin resin composition and a plasticizer, molding the mixture into a sheet shape, then drawing in some cases, and then extracting the plasticizer, a method for making it porous by melt kneading a polyolefin resin composition, extruding the polyolefin resin composition at a high draw ratio, and then peeling a polyolefin crystal interface by heat treatment and drawing, a method for making it porous by melt kneading a polyolefin resin composition and an inorganic filling material, molding the mixture into a sheet, and then peeling an interface between the polyolefin and the inorganic filling material by drawing, a method for making it porous by dissolving a polyolefin resin composition, then dipping the polyolefin resin composition into a poor solvent for the polyolefin, and solidifying the polyolefin while simultaneously removing the solvent, and the like. Hereinafter, as one example of a method for manufacturing a porous membrane, a method for melting, kneading, and molding a polyolefin resin composition and a plasticizer into a sheet shape, and then extracting the plasticizer will be described.

First, a polyolefin resin composition and a plasticizer are melt-kneaded. Examples of a melt kneading method include, for example, a method for putting a polyolefin resin and other additives as necessary into a resin kneading device such as an extrusion machine, a kneader, a Laboplastomil, a kneading roll, and a Banbury mixer, and introducing and kneading a plasticizer at any ratio while heating and melting a resin component. At this time, before the polyolefin resin, the other additives, and the plasticizer are put into the resin kneading device, it is preferable to perform pre-kneading in advance in a predetermined proportion by using a Henschel mixer and the like. It is more preferable to put only a part of the plasticizer in pre-kneading, and perform kneading while side-feeding the rest of the plasticizer to the resin kneading device. In this way, dispersibility of the plasticizer can be increased, and a sheet-shaped molded body of a melt-kneaded mixture of the resin composition and the plasticizer can be drawn to a high factor without a membrane rupture when the sheet-shaped molded body is drawn in a subsequent step.

As the plasticizer, a non-volatile solvent that may form a uniform solution at a melting point of polyolefin or higher can be used. Specific examples of such a non-volatile solvent include, for example, hydrocarbons such as liquid paraffin and paraffin wax; esters such as dioctyl phthalate and dibutyl phthalate; higher alcohols such as oleyl alcohol and stearyl alcohol; and the like. Particularly, the liquid paraffin is preferable since the liquid paraffin has high compatibility with polyethylene and polypropylene, and a low risk of interfacial peeling between the resin and the plasticizer even when a melt-kneaded mixture is drawn, and thus uniform drawing tends to be easily carried out.

A ratio between the polyolefin resin composition and the plasticizer is not particularly limited as long as the polyolefin resin composition and the plasticizer can be uniformly melt kneaded and formed into a sheet shape. For example, a weight fraction of the plasticizer in a composition formed of the polyolefin resin composition and the plasticizer is preferably 30 weight% or more and 80 weight% or less and more preferably 40 weight% or more and 70 weight% or less. When the weight fraction of the plasticizer is 80 weight% or less, there are tendencies that melt tension during melt molding is less likely to be insufficient and moldability improves. On the other hand, when the weight fraction is 30 weight% or more, cutting of polyolefin chains does not occur even with the mixture of the polyolefin resin composition and the plasticizer being drawn to a high factor, a uniform and fine pore structure is more likely to be formed, and strength is also more likely to increase.

Next, the melt-kneaded mixture is molded into a sheet shape. Examples of a method for manufacturing a sheet-shaped molded body include, for example, a method for extruding a melt-kneaded mixture into a sheet shape via a T die and the like, bringing the melt-kneaded mixture into contact with a heat conductor, cooling the melt-kneaded mixture to a temperature sufficiently lower than a crystallization temperature of a resin component, and performing solidification. As the heat conductor used for cooling and solidification, metal, water, air, a plasticizer itself, or the like can be used, but a metal roll is preferable since the metal roll has high heat conduction efficiency. At this time, when the mixture is brought into contact with metal rolls, the mixture is more preferably sandwiched between the metal rolls since heat conduction efficiency is further increased, the sheet becomes oriented, membrane strength is increased, and surface smoothness of the sheet also improves. A die lip gap at a time of extrusion into a sheet shape by a T die is preferably 400 $\mu$m or more and

3,000 μm or less and further preferably 500 μm or more and 2,500 μm or less. When the die lip gap is 400 μm or more, there are tendencies that incrustation and the like can be reduced, an influence of a streak, a fault, and the like on membrane quality can be lowered, and a membrane rupture and the like can be prevented in a subsequent drawing step. On the other hand, when the die lip gap is 3,000 μm or less, there are tendencies that a cooling speed can be increased, cooling unevenness can be prevented, and thickness stability of the sheet can also be maintained.

The sheet-shaped molded body acquired in such a manner is preferably drawn. Both of uniaxial drawing and biaxial drawing can be suitably used as drawing processing, but the biaxial drawing is preferable from a viewpoint of strength of an acquired porous membrane, and the like. When the sheet-shaped molded body is drawn to a high factor in biaxial directions, molecules become oriented in a plane direction, and a porous membrane acquired as a final result is less likely to tear and has high puncture strength. Examples of a drawing method include, for example, methods such as simultaneous biaxial drawing, sequential biaxial drawing, multistage drawing, and multiple drawing, and the simultaneous biaxial drawing is preferable from viewpoints of an improvement in puncture strength, uniformity of drawing, and a shutdown property.

Note that, herein, the simultaneous biaxial drawing indicates a drawing method in which drawing in the MD and drawing in the TD are simultaneously carried out, and a draw ratio in each of the directions may be different. The sequential biaxial drawing indicates a drawing method in which drawing in the MD or the TD is independently carried out and, while drawing is carried out in the MD or the TD, the other direction is in a non-restraint state or in an anchored state at a fixed length.

The draw ratio is preferably in a range of 20 times to 100 times and more preferably in a range of 25 times to 50 times by an area factor. The draw ratio in each axial direction preferably falls within a range of 4 times to 10 times in the MD and a range of 4 times to 10 times in the TD, and further preferably falls within a range of 5 times to 8 times in the MD and a range of 5 times to 8 times in the TD. When a total area factor is 20 times or more, there is a tendency that sufficient strength can be provided to an acquired porous membrane, whereas, when a total area factor is 100 times or more, there are tendencies that a membrane rupture is prevented in the drawing step and high productivity is acquired.

Further, the sheet-shaped molded body may be subjected to rolling. Rolling can be carried out by, for example, a pressing method using a double belt pressing machine and the like. Rolling can particularly increase orientation of a surface-layer portion. A rolling area factor is preferably greater than 1 time and 3 times or less and is more preferably greater than 1 time and 2 times or less. When the rolling factor is greater than 1 time, there are tendencies that planar orientation increases and membrane strength of a porous membrane acquired as a final result increases. On the other hand, when the rolling factor is 3 times or less, there are tendencies that an orientation difference between the surface-layer portion and a center inner portion is small and a porous structure being uniform in a film thickness direction can be formed, which are preferable.

Next, the plasticizer is removed from the sheet-shaped molded body, and a porous membrane is acquired. Examples of a method for removing the plasticizer include, for example, a method for immersing the sheet-shaped molded body in an extraction solvent, extracting the plasticizer, and sufficiently drying the sheet-shaped molded body. The method for extracting the plasticizer may be any of a batch process and a continuous process. In order to inhibit shrinkage of the porous membrane, it is preferable to restrain an end portion of the sheet-shaped molded body in a series of steps of dipping and drying. A plasticizer residual amount in the porous membrane is preferably less than 1 weight%.

As the extraction solvent, a solvent being a poor solvent for the polyolefin resin, being a good solvent for the plasticizer, and having a boiling point lower than a melting point of the polyolefin resin is preferably used. Examples of such an extraction solvent include, for example, hydrocarbons such as n-hexane and cyclohexane; halogenated hydrocarbons such as methylene chloride and 1,1,1-trichloroethane; a non-chlorine-based halogenated solvent such as hydrofluoroether and hydrofluorocarbon; alcohols such as ethanol and isopropanol; ethers such as diethyl ether and tetrahydrofuran; and ketones such as acetone and methyl ethyl ketone. Note that the extraction solvent may be collected by an operation such as distillation and then reused.

In order to inhibit shrinkage of the porous membrane, heat treatment such as heat setting or heat relaxation can also be carried out after the drawing step or after formation of the porous membrane. The porous membrane may be subjected to post-treatment such as hydrophilization treatment with a surfactant and the like and crosslinking treatment by ionizing radiation and the like.

At least one surface of the polyolefin microporous membrane manufactured by the method described above is preferably subjected to surface treatment from a viewpoint of control of the water contact angle and a viewpoint of achieving both of the adhesive property during pressing to the electrode and the injection property of the electrolyte solution, and the first main surface described above is more preferably subjected to surface treatment. Examples of a surface treatment method include, for example, a corona discharge treatment method, a plasma treatment method, a solvent treatment method, an acid treatment method, an ultraviolet oxidation method, a denaturation treatment method of a surface functional group, an increase/decrease treatment method of a surface functional group amount, a fluorine treatment method, and the like, and the corona discharge treatment is particularly preferably carried out from the viewpoint of controlling the water contact angle.

The corona discharge treatment is preferably carried out under a condition that a discharge amount acquired by dividing an output of a corona discharge treatment device by a conveyance speed and a corona treatment electrode width is 0.1 W/(m$^2$/min.) or more and 500 W/(m$^2$/min.) or less, 0.5 W/(m$^2$/min.) or more and 250 W/(m$^2$/min.) or less, 1 W/(m$^2$/min.) or more and 100 W/(m$^2$/min.) or less, 1 W/(m$^2$/min.) or more and 50 W/(m$^2$/min.) or less, or 2 W/(m$^2$/min.) or more and 30 W/(m$^2$/min.) or less from the viewpoint of control of the water contact angle and a viewpoint of productivity or economic efficiency.

<Coating Layer>

The separator according to the present embodiment includes the first coating layer on the first main surface of the polyolefin microporous membrane when $R_{expose}$ described above is 34 area% or more and less than 100 area%, and may include the second coating layer on the second main surface of the polyolefin microporous membrane as desired.

The coating layer is a layer formed by coating on the polyolefin microporous membrane, and is, for example, an inorganic coating layer, a thermoplastic resin layer, a mixed layer including an inorganic filler and a thermoplastic resin in a proportion of 3:7 to 7:3 at a weight ratio, and the like.

In the separator according to the present embodiment, the first coating layer and the second coating layer may be the same or different, an inorganic coating layer is not preferably provided on the first main surface side of the polyolefin microporous membrane from viewpoints of an adjustment of $R_{expose}$ described above, consideration for the environment, economic efficiency, and productivity, and then at least one selected from a group consisting of an inorganic coating layer, a thermoplastic resin layer, and a mixed layer is preferably provided on the second main surface side from a viewpoint of strength or a heat shrinkage rate of the separator. From the similar viewpoints, when $R_{expose}$ described above is 34 area% or more and less than 100 area%, a thermoplastic resin layer is preferably provided as the first coating layer on the first main surface of the polyolefin microporous membrane, and then a thermoplastic resin included in the first coating layer and/or the second coating layer is more preferably a particulate polymer.

A total coverage area ratio of the first coating layer to the first main surface of the polyolefin microporous membrane is preferably 0 area% or more and 66 area% or less, more preferably 0 area% or more and 60 area% or less, further preferably 0 area% or more and 50 area% or less, and still further preferably 0.6 area% or more and 50 area% or less from the viewpoint of achieving both of the adhesive property by the separator and the injection property and the viewpoint of an adjustment of $R_{expose}$ described above. From the similar viewpoints, when the coating layer is provided on the first main surface, a total coverage area ratio is preferably exceeding 0 area% and 66 area% or less, more preferably exceeding 0 area% and 60 area% or less, further preferably 0.6 area% or more and 50 area% or less, still further preferably 0.6 area% or more and 40 area% or less, even further preferably 0.6 area% or more and 30 area% or less, especially preferably 1 area% or more and 15 area% or less, particularly preferably 1 area% or more and 10 area% or less, significantly preferably 1 area% or more and 4.9 area% or less, and most preferably 1 area% or more and 2 area% or less.

In the present specification, when a surface of a coated body is set as a base material surface, a total coverage area ratio S of a coating layer present in the base material surface is calculated from the following formula.

$$S \text{ (area\%)} = \text{total coverage area of coating layer} \div \text{base material surface area} \times 100$$

In general, a total coverage area ratio of a coating layer can be adjusted by changing polymer concentration of a coating solution or a coating amount of a polymer solution, a coating method, and a coating condition.

A total coverage area ratio of the first coating layer to the first main surface of the polyolefin microporous membrane can be adjusted by, for example, partial coating, dot coating, pattern coating, and the like of a first coating solution on the first main surface.

On the other hand, the second coating layer can be disposed by any coating method such as full coating, partial coating, dot coating, and pattern coating according to a total coverage area ratio to the second main surface of the polyolefin microporous membrane.

The second coating layer is preferably an inorganic coating layer and/or a thermoplastic resin layer from a viewpoint of strength or a heat shrinkage rate of the separator and or a viewpoint of the adhesive property to the electrode. When the separator includes the inorganic coating layer and the thermoplastic resin layer on the second main surface side with reference to the polyolefin microporous membrane, both of the layers are preferably disposed in such a way that at least a part of the thermoplastic resin layer is exposed from the separator, and the inorganic coating layer and the thermoplastic resin layer are more preferably laminated in this order from the second main surface.

The thermoplastic resin layer and the inorganic coating layer will be each described below as a representative example of the coating layer.

[Thermoplastic Resin Layer]

The thermoplastic resin layer according to the present embodiment includes a thermoplastic polymer.

(Thermoplastic Polymer)

The thermoplastic polymer used in the present embodiment is not particularly limited, and examples include, for example, polyolefin resins such as polyethylene, polypropylene, and α-polyolefin; fluorine-containing resins such as polyvinylidene fluoride and polytetrafluoroethylene, and copolymers including these; diene-based polymers including conjugated dienes such as butadiene and isoprene as monomer units, or copolymers including these, and hydrides thereof; acrylic polymers including acrylic acid esters, methacrylic acid esters, and the like as monomer units, or copolymers including these, and hydrides thereof; rubber compounds such as ethylene propylene rubber, polyvinyl alcohol, and polyvinyl acetate; cellulose derivatives such as ethyl cellulose, methyl cellulose, hydroxyethyl cellulose, and carboxymethyl cellulose; resins having a melting point and/or a glass transition temperature of 180°C or higher such as polyphenylene ether, polysulfone, polyether sulfone, polyphenylene sulfide, polyether-imide, polyamide-imide, polyamide, and polyester compounds, and a mixture of these; and the like.

As a monomer used for synthesis of thermoplastic polymers, a monomer including at least one group selected from a group consisting of a hydroxyl group, a sulfonic acid group, a carboxyl group, an amide group, and a cyano group can also be used.

Among the thermoplastic polymers, a diene-based polymer, an acrylic polymer, or a fluorine-based polymer is preferable due to excellent bondability to an electrode active material, and excellent strength or flexibility.

(Diene-based Polymer)

The diene-based polymer is not particularly limited, and is, for example, a polymer including a monomer unit acquired by polymerizing conjugated dienes having two conjugated double bonds such as butadiene and isoprene. The conjugated diene monomer is not particularly limited, and examples include, for example, 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene, and the like. These may be polymerized alone or copolymerized.

A proportion of the monomer unit acquired by polymerizing the conjugated diene in the diene-based polymer is not particularly limited, and is, for example, 40 weight% or more, preferably 50 weight% or more, and more preferably 60 weight% or more in a total diene-based polymer.

The diene-based polymer described above is not particularly limited, and examples include, for example, homopolymers of conjugated dienes such as polybutadiene and polyisoprene, and copolymers with monomers that are copolymerizable with conjugated dienes. The copolymerizable monomer is not particularly limited, and examples can include, for example, a (meth)acrylate monomer described below and monomers described below (hereinafter also referred to as "other monomers").

The "other monomers" are not particularly limited, and examples include, for example, α,β-unsaturated nitrile compounds such as acrylonitrile and methacrylonitrile; unsaturated carboxylic acids such as acrylic acid, methacrylic acid, itaconic acid, and fumaric acid; styrene-based monomers such as styrene, chlorostyrene, vinyltoluene, t-butylstyrene, vinylbenzoic acid, methyl vinylbenzoate, vinylnaphthalene, chloromethyl styrene, hydroxymethyl styrene, α-methyl styrene, and divinylbenzene; olefins such as ethylene and propylene; halogen atom-containing monomers such as vinyl chloride and vinylidene chloride; vinyl esters such as vinyl acetate, vinyl propionate, vinyl butyrate, vinyl benzoate; vinyl ethers such as methyl vinyl ether, ethyl vinyl ether, and butyl vinyl ether; vinyl ketones such as methyl vinyl ketone, ethyl vinyl ketone, butyl vinyl ketone, hexyl vinyl ketone, and isopropenyl vinyl ketone; heterocyclic ring-containing vinyl compounds such as N-vinylpyrrolidone, vinylpyridine, and vinylimidazole; acrylic acid ester compounds and/or methacrylic acid ester compounds such as methyl acrylate and methyl methacrylate; hydroxyalkyl group-containing compounds such as β-hydroxyethyl acrylate and β-hydroxyethyl methacrylate; amide-based monomers such as acrylamide, N-methylolacrylamide, and acrylamide-2-methylpropanesulfonic acid; and the like, and one kind may be used alone or two or more kinds of these may be used in combination.

(Acrylic Polymer)

The acrylic polymer is not particularly limited, and is preferably a polymer including a monomer unit acquired by polymerizing a (meth)acrylate monomer.

Note that, in the present specification, "(meth)acrylic acid" indicates "acrylic acid or methacrylic acid", and "(meth)acrylate" indicates "acrylate or methacrylate".

The (meth)acrylate monomer is not particularly limited, and examples include, for example, alkyl (meth)acrylates such as methyl (meth)acrylate, ethyl (meth)acrylate, n-propyl (meth)acrylate, isopropyl (meth)acrylate, n-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, lauryl (meth)acrylate, n-tetradecyl (meth)acrylate, and stearyl (meth)acrylate; hydroxyl group-containing (meth)acrylates such as hydroxyethyl (meth)acrylate, hydroxypropyl (meth)acrylate, and hydroxybutyl (meth)acrylate; amino group-containing (meth)acrylates such as aminoethyl (meth)acrylate; and epoxy group-containing (meth)acrylates such as glycidyl (meth)acrylate.

A proportion of the monomer unit acquired by polymerizing the (meth)acrylate is not particularly limited, and is, for example, 40 weight% or more, preferably 50 weight% or more, and more preferably 60 weight% or more in a total acrylic polymer. The acrylic polymer includes homopolymers of (meth)acrylate monomers, and copolymers with monomers that are copolymerizable with the homopolymers. The copolymerizable monomer includes the "other monomers" listed under "(Diene-based Polymer)" described above, and one kind may be used alone or two kinds or more of these may be used in combination.

(Fluorine-based Polymer)

The fluorine-based polymer is not particularly limited, and examples include, for example, vinylidene fluoride homopolymers, and copolymers of monomers that are copolymerizable with the vinylidene fluoride homopolymers. The fluorine-based polymer is preferable from a viewpoint of electrochemical stability.

A proportion of the monomer unit acquired by polymerizing vinylidene fluoride is not particularly limited, and is, for example, 40 weight% or more, preferably 50 weight% or more, and more preferably 60 weight% or more. The monomer that is copolymerizable with vinylidene fluoride is not particularly limited, and examples can include, for example, fluorine-containing ethylenic unsaturated compounds such as vinyl fluoride, tetrafluoroethylene, trifluorochloroethylene, hexafluoropropylene, hexafluoroisobutylene, perfluoroacrylic acid, perfluoromethacrylic acid, and fluoroalkyl esters of acrylic acid, or methacrylic acid; non-fluorinated ethylenic unsaturated compounds such as cyclohexyl vinyl ether and hydroxyethyl vinyl ether; non-fluorinated diene compounds such as butadiene, isoprene, and chloroprene; and the like.

Among the fluorine-based polymers, homopolymers of vinylidene fluoride, a vinylidene fluoride/tetrafluoroethylene copolymer, a vinylidene fluoride/tetrafluoroethylene/hexafluoropropylene copolymer, and the like are preferable. A particularly preferable fluorine-based polymer is a vinylidene fluoride/tetrafluoroethylene/hexafluoropropylene copolymer, and a monomer composition thereof is normally 30 to 90 weight% of vinylidene fluoride, 9 to 50 weight% of tetrafluoroethylene, and 1 to 20 weight% of hexafluoropropylene. Particles of the fluorine resins particles may be used alone or in mixture of two kinds or more.

As a monomer used for synthesis of the thermoplastic polymers described above, a monomer including a hydroxy group, a carboxyl group, an amino group, a sulfonic acid group, an amide group, or a cyano group can also be used.

The monomer including the hydroxy group is not particularly limited, and examples can include, for example, a vinyl-based monomer such as penteneol.

The monomer including the carboxyl group is not particularly limited, and examples can include, for example, a vinyl-based monomer such as unsaturated carboxylic acid or pentenoic acid having ethylenic double bonds, such as (meth)acrylic acid and itaconic acid.

The monomer including the amino group is not particularly limited, and examples can include, for example, 2-aminoethyl methacrylate, and the like.

The monomer including the sulfonic acid group is not particularly limited, and examples can include, for example, vinylsulfonic acid, methylvinylsulfonic acid, (meth)allylsulfonic acid, styrenesulfonic acid, (meth)acrylate-2-sulfonate, 2-acrylamide-2-methylpropanesulfonic acid, 3-allyloxy-2-hydroxypropanesulfonic acid, and the like.

The monomer including the amide group is not particularly limited, and examples can include, for example, acrylamide, methacrylamide, N-methylolacrylamide, N-methylolmethacrylamide, and the like.

The monomer including the cyano group is not particularly limited, and examples can include, for example, acrylonitrile, methacrylonitrile, $\alpha$-chloroacrylonitrile, $\alpha$-cyanoethyl acrylate, and the like.

The thermoplastic polymer used in the present embodiment may be one polymer alone or a blend of two or more polymers, but it preferably includes two or more kinds of polymers. The thermoplastic polymer may also be used together with a solvent, the solvent being one that can uniformly and stably disperse the thermoplastic polymer, such as N-methylpyrrolidone, N,N-dimethylformamide, N,N-dimethyl acetamide, water, ethanol, toluene, hot xylene, methylene chloride, and hexane, with aqueous solvents being preferable among these. The thermoplastic polymer may also be used in the form of a latex.

(Glass Transition Point of Thermoplastic Polymer)

From the viewpoint of exhibiting adhesive force between the separator and the electrode, while also ensuring proper distance between the electrode and the separator in the power storage device and shortening the electrolyte solution injection time, the thermoplastic polymer preferably has s thermal property with at least two glass transition temperatures, at least one of the glass transition temperatures being in the range of lower than 20°C, and at least one of the glass transition temperatures being in the range of 40°C to 110°C.

Herein, the glass transition temperature is determined from a DSC curve acquired by differential scanning calorimetry (DSC). Note that, in the present specification, the glass transition temperature may also be referred to as "Tg".

Specifically, it is determined by an intersection between a straight line extending a low-temperature end baseline in the DSC curve toward a high-temperature end, and a tangent line at an inflection point in a stepwise change region of glass transition. More specifically, it may be determined with reference to the method described in the Examples.

Herein, the "glass transition" refers to a value when a change in heat quantity accompanying a change in state of a polymer test piece in DSC occurs at the endothermic end. Such a change in heat quantity is observed as a stepwise change in the DSC curve, or a combination of a stepwise change and a peak.

The "stepwise change" is a portion of the DSC curve that moves away from the previous baseline and toward a new baseline. This also includes any combination of a peak and a stepwise change.

The "inflection point" is a point at which a slope of the DSC curve is maximum in the stepwise change region. In the stepwise change region, this can also represent a point where an upwardly convex curve changes to a downwardly convex curve.

The term "peak" refers to a portion of the DSC curve that moves away from the baseline and then returns to the same baseline.

The term "baseline" refers to the DSC curve in a temperature zone where no transition or reaction takes place in a test piece.

In the present embodiment, when at least one of the glass transition temperatures of the thermoplastic polymer used is in the range of lower than 20°C, adhesiveness to a coated body such as a polyolefin microporous membrane and an inorganic coating layer becomes excellent, resulting in an effect of excellent adhesiveness between the separator and the electrode. At least one of the glass transition temperatures of the thermoplastic polymer used is more preferably in the range of 15°C or lower, and further preferably in the range of -30°C or higher and 15°C or lower. The glass transition temperature in the range of lower than 20°C is particularly preferably only in the range of -30°C or higher and 15°C or lower from the viewpoint of increasing adhesiveness between the thermoplastic polymer and the microporous membrane while also ensuring satisfactory handleability.

In the present embodiment, when at least one of the glass transition temperatures of the thermoplastic polymer used is in the range of 40°C or higher and 110°C or lower, the adhesive property between the separator and the electrode and the handleability become excellent, and a distance between the electrode surface and the separator substrate surface in the power storage device can be further maintained, while also shortening the electrolyte solution injection time. At least one of the glass transition temperatures of the thermoplastic polymer used is more preferably in the range of 45°C or higher and 100°C or lower, and further preferably in the range of 50°C or higher and 95°C or lower. From the viewpoint of handleability, the Tg is 70°C or higher as long as the effect of the present invention is not impeded.

A thermoplastic polymer having two glass transition temperatures can be acquired by, for example, a method of blending two or more kinds of thermoplastic polymers or a method using a thermoplastic polymer having a core-shell structure, without any limitation to these methods. A core-shell structure means that a polymer has a double structure form, made of a composition in which the polymer belonging to a core portion and the polymer belonging to a shell portion are different.

Particularly, for a polymer blend or a core-shell structure, the glass transition temperature of the thermoplastic polymer as a whole can be controlled by combination of a polymer having a high glass transition temperature and a polymer having a low glass transition temperature. A plurality of functions can be provided to the thermoplastic polymer as a whole. In a case of a blend, for example, both stickiness resistance and wettability with the polyolefin microporous membrane can be obtained particularly with a blend of two or more kinds of polymers having a glass transition temperature in the range of 20°C or higher, and a polymer having a glass transition temperature in the range of lower than 20°C. A mixture ratio in the case of a blend is preferably in the range of 0.1:99.9 to 99.9:0.1, more preferably 5:95 to 95:5, furthermore preferably 50:50 to 95:5, and still further preferably 60:40 to 90:10, as the ratio of polymers having a glass transition temperature in the range of 20°C or higher and polymers having a glass transition temperature in the range of lower than 20°C. In a case of a core-shell structure, the adhesive property or compatibility with the polyolefin microporous membrane or other materials can be adjusted by changing the outer shell polymer, and an increased adhesive property to the electrode after hot pressing, for example, can be adjusted by adjusting the polymer in the center section. The viscoelasticity can also be controlled by combination of a polymer with high viscosity and a polymer with high elasticity.

Note that the glass transition temperature of the shell of a thermoplastic polymer having the core-shell structure is not particularly limited, and it is preferably lower than 20°C, more preferably 15°C or lower, and further preferably -30°C or higher and 15°C or lower. The glass transition temperature of the core of a thermoplastic polymer having the core-shell structure is also not particularly limited, and it is preferably 20°C or higher, more preferably 20°C or higher and 120°C or lower, and further preferably 50°C or higher and 120°C or lower.

In the present embodiment, the glass transition temperature (Tg) of the thermoplastic polymer can be appropriately adjusted by changing the monomer components used for manufacturing the thermoplastic polymer and the loading proportion of each monomer, for example. In other words, the Tg for each monomer used for manufacturing the thermoplastic polymer can be roughly estimated from the commonly used Tg for its homopolymer (as listed in the "Polymer Handbook" (a Wiley-Interscience Publication), for example), and the mixing proportion of the monomer. For example, a copolymer with a high Tg can be acquired by blending a high proportion of a monomer such as styrene, methyl methacrylate, and acrylonitrile, which yield polymers with Tg of about 100°C. On the other hand, for example, a copolymer with a low Tg can be acquired by blending a high proportion of a monomer such as butadiene which yields a polymer with Tg of about -80°C, or n-butyl acrylate and 2-ethylhexyl acrylate which yield polymers with Tg of about -50°C.

The Tg of the polymer can be approximated by the Fox formula (formula (1) below). Note that the glass transition point of the thermoplastic polymer according to the present embodiment is a value measured by the method using DSC described above.

$$1/Tg = W_1/Tg_1 + W_2/Tg_2 + ... + W_i/Tg_i + ... W_n/Tg_n \quad (1)$$

{In formula (1), Tg (K) represents the Tg of the copolymer, $Tg_i$ (K) represents the Tg of a homopolymer of each monomer i, and $W_i$ represents a mass fraction of each monomer.}

(Structure of Thermoplastic Resin Layer)

In the thermoplastic resin layer, it is preferable that a thermoplastic resin having a glass transition temperature of 40°C or higher and 110°C or lower is present on the outermost surface side of the separator for a power storage device, and a thermoplastic resin having a glass transition temperature of lower than 20°C is present on the interface side between the polyolefin microporous membrane and the thermoplastic resin layer. Note that the "outermost surface" is a surface of the thermoplastic resin layer that contacts with an electrode when the separator for a power storage device and the electrode are laminated. The "interface" is a surface of the thermoplastic resin layer that contacts with the polyolefin microporous membrane.

When a thermoplastic polymer having a glass transition temperature of 40°C or higher and 110°C or lower is present in the thermoplastic resin layer on the outermost surface side of the separator for a power storage device, adhesiveness with the microporous membrane becomes excellent, and adhesiveness between the separator and the electrode tends to become excellent as a result. When a thermoplastic polymer having a glass transition temperature of lower than 20°C is present on the interface side between the polyolefin microporous membrane and the thermoplastic resin layer, the adhesive property between the separator and the electrode and the handleability tend to become excellent. The separator including such a thermoplastic resin layer tends to have further improved handleability and the adhesive property between the separator and the electrode.

The structure as described above can be obtained as a structure in which the thermoplastic polymer (a) is composed of thermoplastic polymer particles and a binder polymer that binds the thermoplastic polymer particles to the polyolefin microporous membrane with the thermoplastic polymer particles exposed on the surface, the glass transition temperature of the thermoplastic polymer particles is in the range of 40°C or higher and 110°C or lower, and a thermoplastic polymer having a glass transition temperature of lower than 20°C is present on the interface side between the polyolefin microporous membrane and the thermoplastic resin layer, and/or the thermoplastic polymer (b) has a layered structure, the glass transition temperature of the thermoplastic polymer in the outermost surface layer when used as a separator, is in the range of 40°C or higher and 110°C or lower, and a thermoplastic polymer having a glass transition temperature of lower than 20°C is present on the interface side between the polyolefin microporous membrane and the thermoplastic resin layer. Note that the thermoplastic polymer (b) may also have a layered structure of polymers with different Tg values.

The thermoplastic resin layer may have a dot pattern as desired. The dots are portions including the thermoplastic polymer and portions not including the thermoplastic polymer on the polyolefin microporous membrane, the portions including the thermoplastic polymer being present as islands. Note that the portions including the thermoplastic polymer of the thermoplastic resin layer may be independent.

The specified dot pattern in the thermoplastic resin layer can be achieved, for example, by optimizing the thermoplastic polymer-containing coating solution, adjusting polymer concentration of a coating solution or a coating amount, a coating method, or a coating condition, modifying the printing plate, and the like, in the separator manufacturing process.

When the thermoplastic resin layer is disposed in a dot pattern as the first coating layer on the first main surface of the polyolefin microporous membrane, the dot pattern of the thermoplastic resin layer is preferably provided in such a way that $R_{expose}$ described above is 34 area% or more and less than 100 area%, and the dot pattern of the thermoplastic resin layer is preferably provided in such a way that a total coverage area ratio of the thermoplastic resin layer to the first main surface exceeds 0 area% and 66 area% or less.

When the thermoplastic resin layer is disposed as the second coating layer on the second main surface of the polyolefin microporous membrane, for example, a coating method such as full coating, partial coating, dot pattern coating on the thermoplastic resin layer, and a combination of these methods may be adopted.

(Mean Particle Diameter of Thermoplastic Polymer)

The structure of the thermoplastic polymer in the present embodiment is not particularly limited and may be particulate, for example. Such a structure tends to provide more excellent adhesive property between the separator and the electrode and handleability for the separator. The term "particulate" as used herein means that, in measurement with a scanning electron microscope (SEM), the individual thermoplastic polymers have borders with shapes such as thin elongated, spherical, or polygonal shapes.

The mean particle diameter of the thermoplastic polymer particles is preferably 0.1 $\mu$m or more and 2.0 $\mu$m or less, more preferably 0.16 $\mu$m or more and 1.5 $\mu$m or less, further preferably 0.2 $\mu$m or more and 1.0 $\mu$m or less, and most preferably 0.3 $\mu$m or more and 0.6 $\mu$m or less, from the viewpoint of exhibiting adhesive force between the separator and the electrode while a distance between a plurality of electrodes across the separator can be maintained, and shortening the injection time for the electrolyte solution into the power storage device.

(Degree of Swelling of Thermoplastic Polymer with respect to Electrolyte Solution)

From the viewpoints of control of $R_{expose}$ described above, the adhesive property between the second main surface of the polyolefin microporous membrane and the electrode, and the battery characteristic such as the cycle characteristic, the thermoplastic polymer in the present embodiment preferably has a property of swelling with respect to the electrolyte solution. The degree of swelling of the thermoplastic polymer with respect to the electrolyte solution is more preferably by a factor of at least 2 and no more than 15. The degree of swelling of the thermoplastic polymer in the present embodiment with respect to the electrolyte solution can be adjusted by, for example, changing the monomer components to be polymerized and the loading ratio of each monomer.

(Basis Weight Per First Main Surface of Thermoplastic Resin Layer)

In the separator according to the present embodiment, a basis weight per the first main surface of the thermoplastic resin layer is preferably 0.2 g/m$^2$ or less, more preferably 0.1 g/m$^2$ or less, and most preferably 0.05 g/m$^2$ or less from the viewpoint of achieving both of adhesive force and the injection property. The basis weight of the thermoplastic resin layer can be adjusted by changing polymer concentration of a coating solution or a coating amount of a polymer solution. From a viewpoint of maintaining a cell shape, the first main surface preferably includes the thermoplastic resin layer as an adhesive layer. The basis weight per the first main surface of the thermoplastic resin layer is preferably in a range exceeding 0.03 g/m$^2$ from the viewpoint of inhibiting deformation of the cell shape with expansion and shrinkage of the electrode and obtaining a satisfactory cycle characteristic for the battery.

(Basis Weight Per Second Main Surface of Thermoplastic Resin Layer)

In the separator according to the present embodiment, a basis weight per the second main surface of the thermoplastic resin layer is preferably 0.3 g/m$^2$ or less, more preferably 0.06 g/m$^2$ or more and 0.25 g/m$^2$ or less, and most preferably 0.1 g/m$^2$ or more and 0.2 g/m$^2$ or less from the viewpoint of adhesive force. The basis weight of the thermoplastic resin layer can be adjusted by changing polymer concentration of a coating solution or a coating amount of a polymer solution. The basis weight per the second main surface of the thermoplastic resin layer is preferably in a range exceeding 0.15 g/m$^2$, as long as the effect of the present invention is not impeded, from the viewpoint of inhibiting deformation of the cell shape with expansion and shrinkage of the electrode and obtaining a satisfactory cycle characteristic for the battery.

(Coverage of Substrate Surface by Thermoplastic Resin Layer)

In the present embodiment, a total coverage area ratio of the thermoplastic resin layer on the first main surface of the polyolefin microporous membrane is preferably 0 area% or more and 66 area% or less, more preferably 0 area% or more and 60 area% or less, further preferably 0 area% or more and 50 area% or less, and still further preferably 0.6 area% or more and 50 area% or less, from the viewpoint of control of $R_{expose}$ being an exposure proportion of the first main surface having the water contact angle of 43° or more and 118° or less and the viewpoint of achieving both of the adhesive property during pressing between the separator and the electrode and the injection property of the electrolyte solution. From the similar viewpoint, when the thermoplastic resin layer is provided as the first coating layer on the first main surface, a total coverage area ratio of the thermoplastic resin layer to the first main surface is preferably exceeding 0 area% and 66 area% or less, more preferably exceeding 0 area% and 60 area% or less, further preferably 0.6 area% or more and 50 area% or less, still further preferably 0.6 area% or more and 40 area% or less, even further preferably 0.6 area% or more and 30 area% or less, especially preferably 1 area% or more and 15 area% or less, particularly preferably 1 area% or more and 10 area% or less, significantly preferably 1 area% or more and 4.9 area% or less, and most preferably 1 area% or more and 2 area% or less.

In the present embodiment, a total coverage area ratio of the thermoplastic resin layer with respect to the second main surface of the polyolefin microporous membrane may be 0 area% or more and 100 area% or less. When the thermoplastic resin layer is provided as the second coating layer on the second main surface, a total coverage area ratio of the thermoplastic resin layer with respect to the second main surface is preferably 10 area% or more and 60 area% or less, more preferably 20 area% or more and 55 area% or less, and further preferably 30 area% or more and 50 area% or less from the viewpoint of shortening the injection time for the electrolyte solution into the power storage device including the separator while maintaining adhesive force of the separator to the electrode.

When a surface of a coated body is set as a base material surface, a total coverage area ratio $S_h$ of the thermoplastic resin layer present in the base material surface is calculated by the following formula.

$$S_h \text{ (area\%)} = \text{total coverage area of thermoplastic resin layer} \div \text{base material surface area} \times 100$$

A total coverage area ratio of the thermoplastic resin layer can be adjusted by changing polymer concentration of a coating solution or a coating amount of a polymer solution, a coating method, and a coating condition.

When the thermoplastic resin layer is provided on the second main surface or the inorganic coating layer while the inorganic coating layer is entirely or partially disposed on the second main surface of the polyolefin microporous membrane, $S_h$ (area%) may be calculated by setting, as a base material surface area, a total surface area of the second main surface and the inorganic coating layer. From the similar viewpoint described above, the total coverage area ratio $S_h$ of the thermoplastic resin layer to the total surface area of the second main surface and the inorganic coating layer is preferably 10 area% or more and 60 area% or less, more preferably 20 area% or more and 55 area% or less, and further preferably 30 area% or more and 50 area% or less.

(Method for Disposing Thermoplastic Resin Layer)

A method for disposing the thermoplastic resin layer on the polyolefin microporous membrane or the inorganic coating layer formed on the polyolefin microporous membrane is not particularly limited, and examples can include, for example, a method for coating a coating solution containing a thermoplastic polymer onto the polyolefin microporous membrane or the inorganic coating layer formed on the polyolefin microporous membrane, and the like.

The method for coating a coating solution containing a thermoplastic polymer is not particularly limited as long as necessary layer thickness or coating area can be ensured. Examples include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods, spray coater coating methods, ink-jet coating methods, and the like. Preferred among these are gravure coater methods or spray coating methods from viewpoints of obtaining a high degree of freedom for a coating shape of the thermoplastic polymer, and easily acquiring a preferable area ratio. From a viewpoint of adjusting the dot pattern of the thermoplastic resin layer as described above, preferable methods are gravure coater methods, ink-jet coating, and coating methods that allow easy adjustment of the printing plate.

When the coating solution infiltrates to the interior of the microporous membrane in a case where the thermoplastic polymer is applied to the polyolefin microporous membrane, the adhesive resin becomes embedded on the surfaces and interiors of the pores, and permeability decreases. Thus, a medium of the coating solution is preferably a poor solvent for the thermoplastic polymer.

A poor solvent for the thermoplastic polymer is preferably used as the medium of the coating solution, from the viewpoint of inhibiting reduction in permeability, since the coating solution in the microporous membrane fails to infiltrate and the adhesive polymer is present mainly on the surface of the microporous membrane. Water is preferable as a medium. Media that can be used in combination with water are not particularly limited, and examples can include ethanol, methanol, and the like.

In the present embodiment, a coating solution used for coating on the first main surface side and the second main surface side of the polyolefin microporous membrane may be the same or different, and then both of the coating solutions are preferably the same from the viewpoint of consideration for the environment, economic efficiency, or productivity.

From the viewpoint of control of $R_{expose}$ being an exposure proportion of the first main surface having the water contact angle of 43° (inclusive) to 118° (inclusive) and the viewpoint of achieving both of the adhesive property during pressing between the separator and the electrode and the injection property of the electrolyte solution, coating of the coating solution to the first main surface side of the polyolefin microporous membrane is carried out in such a way that the total coverage area ratio $S_h$ of the thermoplastic resin layer to the first main surface is preferably exceeding 0 area% and 66 area% or less, more preferably exceeding 0 area% and 60area% or less, further preferably 0.6 area% or more and 50 area% or less, still further preferably 0.6 area% or more and 40 area% or less, even further preferably 0.6 area% or more and 30 area% or less, especially preferably 1 area% or more and 15 area% or less, particularly preferably 1 area% or more and 10 area% or less, significantly preferably 1 area% or more and 4.9 area% or less, and most preferably 1 area% or more and 2 area% or less.

Coating of the coating solution on the second main surface side of the polyolefin microporous membrane can be carried out in any condition such as full coating, partial coating, and dot coating, for example. Particularly, coating of the coating solution onto the second main surface or the inorganic coating layer disposed on the second main surface is carried out in such a way that the total coverage area ratio $S_h$ of the thermoplastic resin layer to the base material surface is preferably 10 area% or more and 60 area% or less, more preferably 20 area% or more and 55 area% or less, and further preferably 30 area% or more and 50 area% or less from the viewpoint of shortening the injection time for the electrolyte solution into the power storage device including the separator while maintaining adhesive force of the separator to the electrode.

Furthermore, surface treatment of the polyolefin microporous membrane serving as the separator base material is preferably carried out before coating since coating of the coating solution is facilitated, and the adhesive property between the polyolefin microporous membrane or the inorganic coating layer and the adhesive polymer also improves.

A method of surface treatment of the first main surface of the polyolefin microporous membrane is not particularly limited as long as the method can adjust $R_{expose}$ described above within a range of 34 area% or more and 100 area% or less, and examples include, for example, a corona discharge treatment method, a plasma treatment method, a solvent treatment method, an acid treatment method, an ultraviolet oxidation method, a denaturation treatment method of a surface functional group, an increase/decrease treatment method of a surface functional group amount, a fluorine treatment method, and the like.

A method of surface treatment of the second main surface of the polyolefin microporous membrane is not particularly limited as long as the method does not significantly impair the porous structure, and examples include, for example, a plasma treatment method, a mechanical roughening method, a solvent treatment method, an acid treatment method, an ultraviolet oxidation method, and the like. Furthermore, surface treatment is preferably carried out after the thermoplastic resin layer is formed on the second main surface side.

A method for removing the solvent from a coating film after coating is not particularly limited as long as the method does not adversely affect the polyolefin microporous membrane or the inorganic coating layer, and examples include, for example, a method for drying the polyolefin microporous membrane and the coating film at a temperature below a melting point thereof while anchoring them, a method of reduced pressure drying at low temperature, a method for immersing it in a poor solvent for the adhesive polymer to solidify the adhesive polymer while simultaneously extracting out the solvent, and the like.

For drying of the coating film, a drying speed is preferably in a range of 0.03 g/(m²·s) or higher and 4.0 g/(m²·s) or lower, more preferably in a range of 0.05 g/(m²·s) or higher and 3.5 g/(m²·s) or lower, and further preferably in a range of 0.1 g/(m²·s) or higher and 3.0 g/(m²·s) or lower. A drying speed within the range described above is a suitable drying speed, and there are tendencies that leveling is reduced, an irregular structure of the thermoplastic polymer particles is provided on the surface of the thermoplastic resin layer, and wettability improves. From the similar viewpoint, temperature is preferably increased by warming or heating during drying of the coating film to an extent that does not degrade a polymer shape or a particle shape in the thermoplastic resin layer.

[Inorganic Coating Layer]

In the separator for a power storage device according to the present embodiment, presence or absence of an inorganic coating layer including an inorganic filler and a resin binder does not matter, but the inorganic coating layer contributes to an improvement in thermal stability and the like, and is thus preferably formed as the second coating layer or a part of the second coating layer on the second main surface of the polyolefin microporous membrane having the porosity of 30% or more and 65% or less described above. As a position of the inorganic coating layer, examples include, for example, a position on at least a part of the second main surface of the polyolefin microporous membrane, or a position between the polyolefin microporous membrane and the thermoplastic resin layer. A microporous membrane provided with the inorganic coating layer or a mixed layer is also referred to as a multilayer porous membrane.

(Inorganic Filler)

The inorganic filler used in the inorganic coating layer described above is not particularly limited, but preferably has a melting point of 200°C or higher and also high electrical insulating properties, and is also electrochemically stable in an operating range of a lithium ion secondary battery.

Examples of materials for the inorganic filler include, for example, oxide-based ceramics such as alumina, silica, titania, zirconia, magnesia, ceria, yttria, zinc oxide, and iron oxide; nitride-based ceramics such as silicon nitride, titanium nitride, and boron nitride; ceramics such as silicon carbide, calcium carbonate, magnesium sulfate, aluminum sulfate, barium sulfate, aluminum hydroxide, aluminum oxide hydroxide or boehmite, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth, and quartz sand; and glass fibers. Of these, at least one selected from a group consisting of alumina, boehmite, and barium sulfate are preferable from the viewpoint of stability in the lithium ion secondary battery. Synthetic boehmite is preferable as boehmite since synthetic boehmite can reduce ionic impurities that may adversely affect the properties of electrochemical elements.

Examples of inorganic filler forms include, for example, laminar, scaly, polyhedral, needle-like, columnar, granular, spherical, fusiform, block-shaped forms, and the like, and various combinations of inorganic fillers with the forms described above may also be used. Preferred among these are block-shaped forms from the viewpoint of a balance between permeability and heat resistance.

An aspect ratio of the inorganic filler is preferably 1.0 or higher and 5.0 or lower, and more preferably 1.1 or higher and 3.0 or lower. The aspect ratio is preferably 5.0 or lower from a viewpoint of inhibiting moisture adsorption on the multilayer porous membrane and inhibiting capacity deterioration with repeated cycling, and also from a viewpoint of inhibiting deformation at temperatures above a melting point of the polyolefin microporous membrane.

A specific surface area of the inorganic filler is preferably $3.0 \, m^2/g$ or higher and $17 \, m^2/g$ or lower, more preferably $5.0 \, m^2/g$ or higher and $15 \, m^2/g$ or lower, and further preferably $6.5 \, m^2/g$ or higher and $13 \, m^2/g$ or lower. The specific surface area is preferably $17 \, m^2/g$ or lower from the viewpoint of inhibiting moisture adsorption on the multilayer porous membrane and inhibiting capacity deterioration with repeated cycling, and the specific surface area is preferably $3.0 \, m^2/g$ or higher from the viewpoint of inhibiting deformation at temperatures above the melting point of the polyolefin microporous membrane. The specific surface area of the inorganic filler is measured by using the BET adsorption method.

In the particle diameter distribution of a slurry containing the inorganic filler, a mean particle diameter $D_{50}$ of the inorganic particles is preferably $0.10 \, \mu m$ or more and $1.40 \, \mu m$ or less, more preferably $0.20 \, \mu m$ or more and $0.80 \, \mu m$ or less, and further preferably $0.25 \, \mu m$ or more and $0.50 \, \mu m$ or less. $D_{50}$ is preferably $0.10 \, \mu m$ or more from the viewpoint of inhibiting moisture adsorption on the multilayer porous membrane and inhibiting capacity deterioration with repeated cycling, and $D_{50}$ is preferably $1.40 \, \mu m$ or less from the viewpoint of inhibiting deformation at temperatures above the melting point of the polyolefin microporous membrane.

In the particle diameter distribution of a slurry containing the inorganic filler, $D_{10}$ of the inorganic particles is preferably $0.08 \, \mu m$ or more and $0.80 \, \mu m$ or less, more preferably $0.09 \, \mu m$ or more and $0.50 \, \mu m$ or less, and further preferably $0.10 \, \mu m$ or more and $0.35 \, \mu m$ or less. $D_{10}$ is preferably $0.08 \, \mu m$ or more from the viewpoint of inhibiting moisture adsorption on the multilayer porous membrane and inhibiting capacity deterioration with repeated cycling, and D10 is preferably $0.80 \, \mu m$ or less from the viewpoint of inhibiting deformation at temperatures above the melting point of the polyolefin microporous membrane.

A method for adjusting the particle diameter distribution of the inorganic filler as described above may be, for example, a method for pulverizing the inorganic filler by using a ball mill, a bead mill, a jet mill, and the like to obtain desired particle diameter distribution, a method for preparing a plurality of fillers with different particle diameter distributions and then blending the fillers, and the like.

A proportion of the inorganic filler in the inorganic coating layer may be set as appropriate from viewpoints of bondability of the inorganic filler, permeability and heat resistance of the multilayer porous membrane, and the like but it is preferably 50 weight % or more and less than 100 weight %, more preferably 70 weight % or more and 99.99 weight % or less, further preferably 80 weight % or more and 99.9 weight % or less, and most preferably 90 weight % or more and 99 weight % or less.

(Resin Binder)

A type of a resin binder is not particularly limited, but the resin binder is preferable to use one that is insoluble in the electrolyte solution of the lithium ion secondary battery and electrochemically stable in the operating range of the lithium ion secondary battery, when the multilayer porous membrane in the present embodiment is used as a separator for a lithium ion secondary battery.

Specific examples of the resin binder include the following 1) to 7).

1) Polyolefins: Polyethylene, polypropylene, ethylene-propylene rubber, and modified forms of these;

2) Conjugated diene-based polymers: For example, styrene-butadiene copolymers and their hydrogenated forms, acrylonitrile-butadiene copolymers and their hydrogenated forms, and acrylonitrile-butadiene-styrene copolymers and their hydrogenated forms;

3) Acrylic-based polymers: For example, methacrylic acid ester-acrylic acid ester copolymers, styrene-acrylic acid ester copolymers, and acrylonitrile-acrylic acid ester copolymers;

4) Polyvinyl alcohol-based resins: For example, polyvinyl alcohol, and polyvinyl acetate;

5) Fluorine-containing resins: For example, polyvinylidene fluoride, polytetrafluoroethylene, vinylidene fluoride-hexafluoropropylene-tetrafluoroethylene copolymer, and ethylene-tetrafluoroethylene copolymer;

6) Cellulose derivatives: For example, ethyl cellulose, methyl cellulose, hydroxyethyl cellulose, and carboxymethyl cellulose; and

7) Polymers that are resins with a melting point and/or glass transition temperature of 180°C. or higher, or without a melting point but having a decomposition temperature of 200°C. or higher; for example, polyphenylene ethers, polysulfones, polyethersulfones, polyphenylene sulfides, polyetherimides, polyamideimides, polyamides, and polyesters.

Preferred from the viewpoint of further improving the safety during short circuiting are the 3) acrylic-based polymers, the 5) fluorine-containing resins, and the 7) polyamide polymers. Polyamides are preferably total aromatic polyamides, and especially polymetaphenylene isophthalamide, from the viewpoint of durability.

From a viewpoint of adaptability between the resin binder and the electrode, the above-described 2) conjugated diene-based polymers are preferable, and, from a viewpoint of voltage endurance, the above-described 3) acrylic-based polymers and 5) fluorine-containing resins are preferable.

The above-described 2) conjugated diene-based polymer is a polymer that includes a conjugated diene compound as a monomer unit.

Examples of the conjugated diene compounds described above include, for example, 1,3-butadiene, 2-methyl-1,3-butadiene, 2,3-dimethyl-1,3-butadiene, 2-chlor-1,3-butadiene, substituted straight-chain conjugated pentadienes, and substituted or side chain-conjugated hexadienes, any of which may be used alone or in combinations of two or more. Particularly, 1,3-butadiene is preferable.

The above-described 3) acrylic-based polymer is a polymer that includes a (meth)acrylic-based compound as a monomer unit. A (meth)acrylic-based compound described above is at least one compound selected from a group consisting of (meth)acrylic acid and (meth)acrylic acid esters.

Examples of (meth)acrylic acid esters to be used as the above-described 3) acrylic-based polymer include, for example, (meth)acrylic acid alkyl esters such as methyl acrylate, methyl methacrylate, ethyl acrylate, ethyl methacrylate, butyl acrylate, butyl methacrylate, 2-ethylhexyl acrylate, and 2-ethylhexyl methacrylate; and epoxy group-containing (meth)acrylic acid esters such as glycidyl acrylate and glycidyl methacrylate; any of which may be used alone or in combinations of two or more. Particularly preferred among these are 2-ethylhexyl acrylate (EHA) and butyl acrylate (BA).

An acrylic-based polymer is preferably a polymer including EHA or BA as a main structural unit, from a viewpoint of safety in impact testing. The main structural unit is a portion of the polymer corresponding to a monomer constituting 40 mol% or more of the entire starting material used to form the polymer.

The above-described 2) conjugated diene-based polymer and 3) acrylic-based polymer may be acquired by copolymerization with other monomers that are copolymerizable with the conjugated diene-based polymer and the acrylic-based polymer. Examples of other copolymerizable monomers to be used include, for example, unsaturated carboxylic acid alkyl esters, aromatic vinyl-based monomers, vinyl cyanide-based monomers, unsaturated monomers including hydroxyalkyl groups, unsaturated amide carboxylate monomers, crotonic acid, maleic acid, maleic acid anhydride, fumaric acid, itaconic acid, and the like, any of which may be used alone or in combinations of two or more. Unsaturated carboxylic acid alkyl ester monomers are particularly preferable among these. Unsaturated carboxylic acid alkyl ester monomers include dimethyl fumarate, diethyl fumarate, dimethyl maleate, diethyl maleate, dimethyl itaconate, monomethyl fumarate, and monoethyl fumarate, any of which may be used alone or in combinations of two or more.

Note that the above-described 2) conjugated diene-based polymer may be acquired by copolymerization of the above-described (meth)acrylic-based compound as another monomer.

From viewpoints of exhibiting high binding force between inorganic particles even at high temperatures above ordinary temperature, and inhibiting heat shrinkage, the resin binder is preferably in the form of a latex, and is more preferably an acrylic-based polymer latex.

A mean particle diameter of the resin binder is preferably 50 nm or more and 500 nm or less, more preferably 60 nm or more and 460 nm or less, and further preferably 80 nm or more and 250 nm or less. In a case where the mean particle diameter of the resin binder is 50 nm or more, the ion permeability is less likely to decrease and a high output characteristic is more likely to be acquired when the porous layer including the inorganic filler and the binder is laminated on at least one side of the polyolefin porous membrane. Also in a case of a rapid temperature increase that occurs during abnormal heat release, a smooth shutdown property is exhibited and a high degree of safety is more likely to be acquired. When a mean particle diameter of the resin binder is 500 nm or less, there are tendencies that satisfactory bindability is exhibited, and satisfactory heat shrinkage as a multilayer porous membrane and excellent safety are obtained.

The mean particle diameter of the resin binder can be controlled by adjusting a polymerization time, a polymerization temperature, a compositional ratio of components, a loading order of components, pH, and the like.

A dispersing agent such as a surfactant may be added to the coating solution in order to improve dispersion stability or coatability. The dispersing agent is adsorbed onto the surfaces of the inorganic particles in the slurry and stabilizes the inorganic particles by electrostatic repulsion or other forces, and examples include, for example, polycarboxylic acid salts, sulfonic acid salts, polyoxyethers, and the like. The amount of the dispersing agent added is preferably 0.2 parts by weight or more and 5.0 parts by weight or less and more preferably 0.3 parts by weight or more and 1.0 parts by weight or less, based on solid content, with respect to 100 parts by weight of the inorganic filler.

(Physical Properties, Structure, and Formation Method of Inorganic Coating Layer)

A thickness of the inorganic coating layer is preferably 0.5 $\mu$m or more and 5.0 $\mu$m or less, more preferably 0.7 $\mu$m or more and 4.0 $\mu$m or less, further preferably 0.8 $\mu$m or more and 3.9 $\mu$m or less, still further preferably 1.0 $\mu$m or more and 3.0 $\mu$m or less, and particularly preferably 1.5 $\mu$m or more and 2.0 $\mu$m or less. The thickness of the inorganic coating layer is preferably 0.5 $\mu$m or more from a viewpoint of inhibiting deformation at temperatures above the melting point of the porous membrane. The thickness of the inorganic coating layer is preferably 5.0 $\mu$m or less from viewpoints of increasing the battery capacity and inhibiting moisture adsorption of the multilayer porous membrane. The thickness of the inorganic coating layer is also preferably 3.9 $\mu$m or less and more preferably 2.0 $\mu$m or less from a viewpoint of shortening the injection time since a filling volume of the electrolyte solution can be reduced.

A layer density in the inorganic coating layer is preferably 1.10 g/(m$^2$·$\mu$m) or more and 3.00 g/(m$^2$·$\mu$m) or less, more preferably 1.20 g/(m$^2$·$\mu$m) or more and 2.90 g/(m$^2$·$\mu$m) or less, further preferably 1.40 g/(m$^2$·$\mu$m) or more and 2.70 g/(m$^2$·$\mu$m) or less, and particularly preferably 1.50 g/(m$^2$·$\mu$m) or more and 2.50 g/(m$^2$·$\mu$m) or less. The layer density in the inorganic coating layer is preferably 1.10 g/(m$^2$·$\mu$m) or more from a viewpoint of inhibiting deformation at temperatures above the melting point of the polyolefin microporous membrane. The layer density in the inorganic coating layer is preferably 3.00 g/(m$^2$·$\mu$m) or less from viewpoints of maintaining the ion permeability of the inorganic coating layer, and inhibiting capacity deterioration with repeated cycling.

Examples of a method for forming the inorganic coating layer can include, for example, a method for coating a coating solution including an inorganic filler and a resin binder onto at least one side of a porous membrane including a polyolefin resin as a main component and forming an inorganic coating layer.

A solvent for the coating solution is preferably one that can uniformly and stably disperse the inorganic filler and the resin binder, and examples include, for example, N-methylpyrrolidone, N,N-dimethylformamide, N,N-dimethyl acetamide, water, ethanol, toluene, hot xylene, methylene chloride, hexane, and the like.

In order to improve the dispersion stability and coatability, the coating solution may also contain various additives including dispersing agents such as surfactants; thickeners; moistening agents; antifoaming agents; pH adjustors that contain acids or alkalis; and the like. These additives are preferably ones that can be removed during solvent removal, but may remain in the inorganic coating layer as long as the additives are electrochemically stable in the operating range of the lithium ion secondary battery, do not interfere with the battery reaction, and are stable up to about 200°C.

A method for dispersing the inorganic filler and the resin binder in the coating solution solvent is not particularly limited as long as the method allows the coating solution to exhibit necessary dispersion properties for a coating step. Examples include, for example, mechanical stirring and the like using a ball mill, a bead mill, a planetary ball mill, a vibrating ball mill, a sand mill, a colloid mill, an attritor, a roll mill, a high-speed impeller disperser, a disperser, a homogenizer, a high-speed impact mill, an ultrasonic disperser, a stirring blade, and the like.

A method for coating the coating solution onto the polyolefin microporous membrane is not particularly limited as long as a necessary layer thickness or a necessary coating area can be ensured, and examples include, for example, gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods, and the like.

Furthermore, surface treatment of the second main surface of the polyolefin microporous membrane serving as the separator base material is preferably carried out before coating of the coating solution since coating of the coating solution is facilitated, and the adhesive property between the inorganic coating layer and the polyolefin microporous membrane surface also improves. A method of surface treatment is not particularly limited as long as the method does not significantly impair the porous structure of the polyolefin microporous membrane, and examples include, for example, a mechanical roughening method, a solvent treatment method, an acid treatment method, an ultraviolet oxidation method, and the like.

A method for removing the solvent from the inorganic coating layer after coating is not particularly limited as long as the method does not adversely affect the polyolefin microporous membrane, and examples include, for example, a method for drying the polyolefin microporous membrane at a temperature below the melting point thereof while anchoring the polyolefin microporous membrane, a method of reduced pressure drying at low temperature, and the like. A drying temperature, take-up tension, and the like are preferably adjusted as appropriate from a viewpoint of controlling shrinkage stress in the MD of the polyolefin microporous membrane and the multilayer porous membrane.

[Mixed Layer]

The separator for a power storage device according to the present embodiment may include, as desired, a mixed layer including the inorganic filler and the thermoplastic resin in a proportion of 3:7 to 7:3 at a weight ratio as the second coating layer or a part of the second coating layer on the second main surface of the polyolefin microporous membrane described above.

Examples of a position of the mixed layer include, for example, a position on at least a part of the second main surface of the polyolefin microporous membrane, a position between the polyolefin microporous membrane and the inorganic coating layer, a position between the polyolefin microporous membrane and the thermoplastic resin layer, a position on the inorganic coating layer disposed on the second main surface, a position on the thermoplastic resin layer disposed on the second main surface, and the like.

As the inorganic filler included in the mixed layer, an inorganic filler constituting the inorganic coating layer described above may be used.

As the thermoplastic resin included in the mixed layer, the thermoplastic polymer constituting the thermoplastic resin layer described above and/or the resin binder constituting the inorganic coating layer may be used, and a thermoplastic resin included in the mixed layer is particularly preferably a particulate polymer, and is more preferably a particulate thermoplastic polymer described above.

A method for forming a mixed layer may include, for example, a step of forming a mixed solution including the inorganic filler and the thermoplastic resin, and a step of applying the mixed solution to the second main surface similarly to the method for disposing the thermoplastic resin layer or the method for forming the inorganic coating layer described above, and may also include, as desired, a step of adjusting the inorganic filler and the thermoplastic resin in the mixed layer to a proportion of 3:7 to 7:3 at a weight ratio by drying and the like, for example.

<Physical Properties and Configuration of Separator>

A lower limit of a thickness of the separator for a power storage device is preferably 6 $\mu$m or more, more preferably 8 $\mu$m or more, further preferably 10 $\mu$m or more, and still further preferably 12 $\mu$m or more from a viewpoint of ensuring the strength of the separator for a power storage device. On the other hand, an upper limit of a thickness of the separator for a power storage device is preferably 30 $\mu$m or less and more preferably 20 $\mu$m or less from a viewpoint of acquiring a satisfactory charge-discharge characteristic, and further preferably 16 $\mu$m or less, still further preferably 14 $\mu$m or less, and particularly preferably 12 $\mu$m or less from a viewpoint of acquiring both a satisfactory charge-discharge characteristic and an injection property.

A lower limit of air permeability of the separator for a power storage device is preferably 10 sec/100 cm$^3$ or more, more preferably 20 sec/100 cm$^3$ or more, further preferably 30 sec/100 cm$^3$, and most preferably 40 sec/100 cm$^3$, and an upper limit is preferably 500 sec/100 cm$^3$ or less, more preferably 300 sec/100 cm$^3$ or less, and further preferably 200 sec/100 cm$^3$ or less. The air permeability is suitably 10 sec/100 cm$^3$ or more from a viewpoint of further reducing self-discharge of the power storage device in a case of the separator for a power storage device. On the other hand, the air permeability is preferably 500 sec/100 cm$^3$ or less from a viewpoint of acquiring a satisfactory charge-discharge characteristic. The air permeability of the separator for a power storage device can be adjusted by changing a draw temperature or a draw ratio when the polyolefin microporous membrane is manufactured, a total coverage area ratio of the thermoplastic resin layer, a presence form, and the like.

A heat shrinkage rate of the separator for a power storage device is 130°C, and a heat shrinkage rate of the TD in an hour is preferably -3% or more and 45% or less, more preferably -1% or more and 41% or less, and further preferably 0% or more and 34% or less. Herein, when the heat shrinkage of the TD is -3% or more, a risk of a short circuit between electrodes due to a twist and the like of the separator caused by negative shrinkage (expansion) can be inhibited, and, furthermore, a decrease in performance and safety can be inhibited. When the heat shrinkage of the TD is 45% or more, a decrease in performance and safety due to occurrence of a slight short circuit during storage testing, and the like can be inhibited. An adjustment of the heat shrinkage rate of the separator can be carried out by appropriately combining a draw operation of a base material and heat treatment. While the heat shrinkage rate of the TD is inhibited, a heat shrinkage rate of the MD is also preferably -3% or more and 45% or less, more preferably -1% or more and 41% or less, and further preferably 0% or more and 34% or less. It is particularly preferable that the separator not including the inorganic coating layer has a heat shrinkage rate within the numerical range described above.

A shutdown temperature of the separator for a power storage device, as an indicator of safety of the power storage device, is preferably 160°C or lower, more preferably 155°C or lower, further preferably 150°C or lower, and most preferably 145°C or lower.

A short-circuit temperature of the separator for a power storage device, as an indicator of heat resistance, is preferably 140°C or higher, more preferably 150°C or higher, and further preferably 160°C or higher. A short-circuit temperature of 160°C or higher is preferable from a viewpoint of safety of the power storage device in a case of the separator for a power storage device.

From a viewpoint of efficiently exhibiting the effect of the present invention and viewpoints of improving productivity by simplification of the coating process and of increasing the adhesive force, the separator preferably has an asymmetrical multilayer structure with reference to the polyolefin microporous membrane. It is more preferable that the separator does not include the coating layer on the first main surface side of the polyolefin microporous membrane, or includes the first coating layer in such a way that $R_{expose}$ is 34 area% or more and less than 100 area% or a total coverage area ratio of the first coating layer to the first main surface falls within a range of 0 area% or more and 66 area% or less, and the separator includes the inorganic coating layer and/or the thermoplastic resin layer on the second main surface side. It is further preferable that the separator includes the inorganic coating layer and/or the thermoplastic resin layer only on the second main surface side. It is particularly preferable that the separator includes the thermoplastic resin layer on the inorganic coating layer disposed only on the second main surface side.

In the separator according to the present embodiment, from a viewpoint of shortening injection completion time of the electrolyte solution into the power storage device including the separator while maintaining adhesive force of the separator for the electrode during pressing, the physical properties of the polyolefin microporous membrane and the separator described above preferably have any of the following relationships.

Relationship 1: A porosity of the polyolefin microporous membrane is 30% or more and 65% or less, and a water contact angle of the first main surface of the polyolefin microporous membrane is 100° or more and 107° or less.

Relationship 2: A porosity of the polyolefin microporous membrane is 30% or more and 65% or less, a water contact angle of the first main surface of the polyolefin microporous membrane is 100° or more and 107° or less, and an indentation elastic modulus of the first main surface of the polyolefin microporous membrane is 10,000 N/mm$^2$ or more and 55,000 N/mm$^2$ or less.

Relationship 3: A porosity of the polyolefin microporous membrane is 30% or more and 65% or less, a water contact angle of the first main surface of the polyolefin microporous membrane is 100° or more and 107° or less, and, when measurement of absorbance in 600 cm$^{-1}$ or more and 4,000 cm$^{-1}$ or less is carried out on the first main surface of the polyolefin microporous membrane by ATR-IR measurement, a ratio between an absorption peak height in 1,715 cm$^{-1}$ and an absorption peak height in 1,472 cm$^{-1}$ is 0.0020 or more and 0.0280 or less.

Relationship 4: A porosity of the polyolefin microporous membrane is 30% or more and 65% or less, an indentation elastic modulus of the first main surface of the polyolefin microporous membrane is 10,000 N/mm$^2$ or more and 55,000 N/mm$^2$ or less, a water contact angle is 100° or more and 107° or less, and, when measurement of absorbance in 600 cm$^{-1}$ or more and 4,000 cm$^{-1}$ or less is carried out on the first main surface of the polyolefin microporous membrane by ATR-IR measurement, a ratio between an absorption peak height in 1,715 cm$^{-1}$ and an absorption peak height in 1,472 cm$^{-1}$ is 0.0020 or more and 0.0280 or less.

Relationship 5: The inorganic coating layer is not provided on the first main surface of the polyolefin microporous membrane and/or the first main surface is directly in contact with a negative electrode in a manufacturing or assembly process of the power storage device in the power storage device.

<Method for Manufacturing Separator>

A method for manufacturing a separator according to the present embodiment is not particularly limited, and examples include, for example, a method using, as the separator, the polyolefin microporous membrane acquired by a method for manufacturing a polyolefin microporous membrane, a method for forming the second coating layer on at least the second main surface of the polyolefin microporous membrane, a method for forming the first coating layer on the first main surface of the polyolefin microporous membrane, and the like, more specifically, a method for forming at least one of the inorganic coating layer, the thermoplastic resin layer, and the mixed layer on the second main surface of the polyolefin microporous membrane, a method for forming the inorganic coating layer on at least the second main surface of the polyolefin microporous membrane and then forming the thermoplastic resin layer on the inorganic coating layer, and the like.

When the first coating layer is formed on the first main surface of the polyolefin microporous membrane, the first coating layer is preferably formed in such a way that $R_{expose}$ described above is 34 area% or more and less than 100 area%, or a total coverage area ratio of the first coating layer to the first main surface exceeds 0 area% and 66 area% or less, and the first coating layer is preferably the thermoplastic resin layer.

In the method for manufacturing a separator according to the present embodiment, the method for manufacturing the polyolefin microporous membrane, the method for disposing the thermoplastic resin layer, the method for forming the inorganic coating layer, or the method for forming the mixed layer can be carried out as described above.

<Laminated Body/Wound Body>

A laminated body according to the present embodiment is acquired by laminating a separator and an electrode. The separator according to the present embodiment can be used as a laminated body by being bonded to the electrode. The laminated body has excellent handleability during winding and an excellent rate characteristic for a power storage device, and, furthermore, also has an excellent adhesive property between the thermoplastic polymer and the polyolefin microporous membrane and excellent permeability. Thus, usage of the laminated body is not particularly limited, and the laminated body can be suitably used for, for example, power storage devices and the like including batteries such as nonaqueous electrolyte solution secondary batteries, condensers, capacitors, or the like.

As an electrode used in the laminated body in the present embodiment, electrodes described below under "Power Storage Device" can be used. A method for manufacturing a laminated body by using the separator in the present embodiment is not particularly limited, and, for example, the laminated body can be manufactured by laminating the separator in the present embodiment and the electrode and performing heating and/or pressing as necessary. The heating and/or pressing can be carried out when the electrode and the separator are laminated. Alternatively, the laminated body can also be manufactured by performing heating and/or pressing on a wound body acquired by laminating the electrode and the separator and then being wound into a circular or flat spiral shape.

The laminated body can also be manufactured by performing lamination in a flat plate shape in an order of positive electrode-separator-negative electrode-separator or negative electrode-separator-positive electrode-separator and performing heating and/or pressing as necessary. From a viewpoint of efficiently exhibiting the effect of the present invention, in the laminated body, it is preferable that the first main surface of the separator described above does not include the inorganic coating layer and/or is in contact with or opposite to a negative electrode, and/or the second main surface of the separator is in contact with or opposite to a positive electrode.

More specifically, the laminated body can be manufactured by preparing the separator in the present embodiment as a longitudinal separator having a width of 10 mm or more and 500 mm or less (preferably 80 mm or more and 500 mm or less) and a length of 200 m or more and 4,000 m or less (preferably 1,000 m or more and 4,000 m or less), laminating the separator in an order of positive electrode-separator-negative electrode-separator or negative electrode-separator-positive electrode-separator, winding the separator as desired, and then performing heating and/or pressing.

A heating temperature is preferably 0°C or higher and 120°C or lower, more preferably 10°C or higher and 80°C or lower, and further preferably 20°C or higher and 40°C or lower. Pressing pressure is preferably 1 MPa or more and 30 MPa or less, more preferably 5 MPa or more and 25 MPa or less, and further preferably 10 MPa or more and 20 MPa or less. A pressing time is preferably 1 second or longer and 30 minutes or shorter, more preferably 2 seconds or longer and 20 minutes or shorter, and further preferably 3 seconds or longer and 10 minutes or shorter.

The order of heating and pressing may be heating followed by pressing, pressing followed by heating, or simultaneous pressing and heating. A step of performing press molding on the wound body of the separator and the electrode is preferably carried out under a condition that a temperature is 20°C or higher and 40°C or lower, pressure is 10 MPa or more and 20 MPa or less, and a time is 2 seconds or longer.

<Power Storage Device>

The separator according to the present embodiment can be used as a separator for a battery, a condenser, or a capacitor, or can be used for separation of substances. When used as a separator for a power storage device, adhesiveness to the electrode and excellent battery performance can be provided. A preferable mode in which the power storage device is a nonaqueous electrolyte solution secondary battery will be described below.

When a nonaqueous electrolyte solution secondary battery is manufactured by using the separator in the present embodiment, there are no limitations on a positive electrode, a negative electrode, and a nonaqueous electrolyte solution, and any publicly known ones can be used.

A positive electrode material is not particularly limited, and examples include, for example, lithium-containing composite oxides such as $LiCoO_2$, $LiNiO_2$, spinel-type $LiMnO_4$, and olivine-type $LiFePO_4$.

A negative electrode material is not particularly limited, and examples include, for example, carbon materials such as graphite, non-graphitizable carbon, easily graphitizable carbon, and complex carbon; and silicon, tin, metal lithium, various alloy materials, and the like.

The nonaqueous electrolyte solution is not particularly limited, and an electrolyte solution with an electrolyte dissolved in an organic solvent can be used, and examples of organic solvents include, for example, propylene carbonate, ethylene carbonate, dimethyl carbonate, diethyl carbonate, and ethylmethyl carbonate, and examples of electrolytes include, for example, lithium salts such as $LiClO_4$, $LiBF_4$, and $LiPF_6$.

From a viewpoint of efficiently exhibiting the effect of the present invention, in the power storage device including the positive electrode, the negative electrode, the separator, and the nonaqueous electrolyte solution, it is preferable that the first main surface of the separator is in contact with or opposite to the negative electrode, and/or the second main surface of the separator is in contact with or opposite to the positive electrode.

Other aspect of the present invention provides the power storage device in which the positive electrode, the negative electrode, the separator, and the electrolyte solution are provided, the inorganic coating layer is not provided on the first main surface of the polyolefin microporous membrane of the separator, and the first main surface is in contact with or opposite to the negative electrode. The power storage device according to the other aspect may secure predetermined adhesive strength without using an adhesive in adhesion between the electrode and the separator, and, from this viewpoint, the first main surface is preferably in direct contact with the negative electrode, and then the power storage device is preferably a nonaqueous electrolyte solution secondary battery.

<Method for Manufacturing Power Storage Device>

A method for manufacturing a power storage device by using the separator in the present embodiment is not particularly limited, and includes, for example, steps (1) to (5) below:

(1) a step of preparing a separator for a power storage device including a polyolefin microporous membrane including a first main surface and a second main surface;
(2) a step of acquiring a wound body by laminating the separator in an order of positive electrode-separator-negative electrode-separator or negative electrode-separator-positive electrode-separator and performing winding into a circular or flat spiral shape, or a step of acquiring a laminated body acquired by lamination in a flat plate shape in an order of positive electrode-separator-negative electrode-separator or negative electrode-separator-positive electrode-separator;
(3) a step of performing heating and/or pressing on the wound body or the laminated body;
(4) a step of housing the wound body or the laminated body in a battery can; and
(5) a step of injecting an electrolyte solution into the battery can.

In the step (1), the separator according to the first aspect described above, the separator according to the second aspect described above, or the separator acquired by combining the first aspect and the second aspect may be prepared. As described above, the separator is acquired according to the method for manufacturing the polyolefin microporous membrane, the method for disposing the thermoplastic resin layer, the method for forming the inorganic coating layer, the method for forming the mixed layer, or the method for manufacturing the separator.

When the power storage device is a secondary battery, for example, the power storage device can be manufactured by preparing the separator in the present embodiment as a longitudinal separator having a width of 10 to 500 mm (preferably 80 to 500 mm) and a length of 200 to 4,000 m (preferably 1,000 to 4,000 m), acquiring a wound body by laminating the separator in an order of positive electrode-separator-negative electrode-separator or negative electrode-separator-positive electrode-separator and performing winding into a circular or flat spiral shape in the step (2), housing the wound body in a battery can in the step (4), and further injecting an electrolyte solution into the battery can in the step (5).

Since the step (2) and the step (3) can be carried out in such a way that the laminated body/wound body described above are acquired, the step (2) and the step (3) may be carried out in any order, successively carried out, or simultaneously carried out. At this time, the laminated body may be formed by performing heating and/or pressing on the wound body. The power storage device can also be manufactured by using, as the wound body, one acquired by winding the laminated body described above into a circular or flat spiral shape. The power storage device can also be manufactured through the step (5) of laminating, by a bag-shaped film, a laminated body being laminated in a flat plate shape in an order of positive electrode-separator-negative electrode-separator or negative electrode-separator-positive electrode-separator, or the laminated body described above, and, in some cases, through the step (3) of performing heating and/or pressing. The step (3) of performing heating and/or pressing described above can be carried out before and/or after the step (5) of injecting an electrolyte solution.

From the viewpoint of efficiently exhibiting the effect of the present invention, in the method for manufacturing the power storage device including the positive electrode, the negative electrode, the separator, and the nonaqueous electrolyte solution, it is preferable that the first main surface of the separator does not include the inorganic coating layer and is in contact with or opposite to the negative electrode, and/or the second main surface of the separator is in contact with or opposite to the positive electrode.

<Use of Separator>

Other aspect of the present invention provides use of the separator in the power storage device and use of the separator in manufacturing of the power storage device.

In the power storage device, the separator according to the first aspect described above, the separator according to the second aspect described above, or the separator acquired by combining the first aspect and the second aspect may be used, and predetermined adhesive strength can be secured without using an adhesive in adhesion between the electrode and the separator, and, from this viewpoint, the first main surface is preferably in direct contact with the negative electrode, and then the power storage device is preferably a nonaqueous electrolyte solution secondary battery.

In the manufacturing of the power storage device, the separator according to the first aspect described above, the separator according to the second aspect described above, or the separator acquired by combining the first aspect and the second aspect may be used, and both of the adhesive property of the separator during pressing to the electrode such as, for example, the dry adhesive property during pressing to the electrode and the like, and the injection property of the electrolyte solution can be achieved, and predetermined adhesive strength can be secured without using an adhesive.

As described above, the manufacturing of the power storage device can be carried out according to the method for manufacturing the power storage device. From the viewpoint of improving the adhesive property between the separator and the electrode and the injection property of the electrolyte solution, in the manufacturing of the power storage device, it is preferable that the inorganic coating layer is not provided on the first main surface of the separator and the first main surface is disposed in such a way as to be in contact with or opposite to the negative electrode of the power storage device, and it is more preferable that the first main surface is in direct contact with the negative electrode. From the similar viewpoint, the separator described above is preferably used in manufacturing of a nonaqueous electrolyte solution secondary battery.

Note that, unless otherwise specified, measured values of various parameters described above are values measured by measuring methods in Examples described below.

EXAMPLES

The present invention will be described below in detail, based on Examples and Comparative Examples, but the present invention is not limited to Examples. Methods for measuring and evaluating various physical properties used in the Manufacturing Examples, Examples, and Comparative Examples were as follows. Note that, unless otherwise specified, various types of measurement and evaluation were carried out under conditions of room temperature of 23°C, 1 atmosphere, and relative humidity of 50%.

[Measurement Method]

<Viscosity Average Molecular Weight (hereinafter also referred to as "Mv")>

The limiting viscosity [η] at 135°C with a decalin solvent was determined based on ASRM-D4020, and Mv of polyethylene was calculated by the following formula.

$$[\eta] = 0.00068 \times Mv^{0.67}$$

Mv of polypropylene was calculated by the following formula.

$$[\eta] = 1.10 \times 10^{-4} Mv^{0.80}$$

<Porosity (%) of Polyolefin Microporous Membrane>

A 10 cm × 10 cm-square sample was cut out from the polyolefin microporous membrane, and volume (cm$^3$) and mass (g) thereof were determined, and a porosity was calculated by using the following formula with a membrane density as 0.95 (g/cm$^3$).

$$Porosity = (Volume - mass/membrane\ density)/volume \times 100$$

<Air Permeability (sec/100 cm$^3$)>

Air permeability resistance measured with a Gurley air permeability tester (G-B2™ by Toyo Seiki Kogyo Co., Ltd.) according to JIS P-8117 was set as air permeability.

<Water Contact Angle (°)>

A glass plate (S1214 by Matsunami Glass Ind., Ltd., size: 76 × 26 mm, thickness: 1.2 to 1.5 mm) was attached to the opposite side from the measuring side of the separator for a power storage device obtained in each of the Examples and Comparative Examples, by using double-sided tape (NICETACK NW-15 by Nichiban Co., Ltd.), to produce a measuring sample. By using a dynamic contact angle meter (model DCA-VM by Kyowa Interface Science Co., Ltd.), a 2 μL droplet of ion exchanged water was formed at a needle tip of a syringe and then dripped onto a measuring sample, and a contact angle of 20,000 ms after liquid separation was measured. An average value of values measured five times was adopted as the contact angle. The contact angle was measured in a thermostatic chamber under conditions with a temperature of 23°C and humidity of 42%.

<Total Coverage Area Ratio (area%) of Thermoplastic Resin Layer With Respect to Base Material Surface>

A total coverage area ratio of a coating pattern of the thermoplastic resin layer on the base material surface was measured by using a microscope (model: VHX-7000 by Keyence Corp.). A separator being a sample was photographed by the command "Full coaxial" at a magnification allowing simultaneous observation of at least 10 dots or more (for example, 100 × for dot diameters of about 200 μm). The commands "Auto area measurement (grain count)", "Extraction method, brightness (normal)" and "Fill holes" were selected from "Measurement, scale", and suitable brightness (preferably -10 or more and 10 or less) was selected to binarize a covered portion and a non-covered portion of the thermoplastic resin layer, for measurement of a total coverage area ratio of the thermoplastic resin layer. When the contrast is insufficiently clear, a different light source (model PD2-1024 by CCS, Inc.) may be used.
A total coverage area ratio of the thermoplastic resin layer to the first main surface was measured by the method described above.

<"Total Coverage Area Ratio (area%) of Thermoplastic Resin Layer in Second Coating Layer">

A "total coverage area ratio of the thermoplastic resin layer in the second coating layer" was also measured by a method similar to the method described above. At this time, when the thermoplastic resin layer is an inorganic coating layer and the like instead of a base material, measurement can also be carried out by binarization by using the inorganic coating layer as a non-covered portion of the thermoplastic resin layer.

<Total Coverage Area Ratio (area%) to Base Material Surface>

A total coverage area ratio (area%) to the base material surface was measured by a method similar to the method described above. At this time, measurement can be carried out by binarization by using, as a covered portion and a non-covered portion, a material other than a base material such as the thermoplastic resin layer and the inorganic coating layer, and a base material.

<Measurement of R$_{expose}$ (area%)>

The proportion R$_{expose}$ (area%) of exposure of the region satisfying the water contact angle in the first main surface of 43° or more and 118° or less was calculated backwards from a total coverage area ratio (area%) of the first coating layer to the first main surface. In other words, calculation was carried out by the following formula:

R$_{expose}$ (area%) = 100 (area%) - (total coverage area ratio (area%) of first coating layer to first main surface).

<Heat Shrinkage Rate (%) at 130°C>

A separator as a sample was cut by 100 mm in the MD and 100 mm in the TD and left at rest for an hour in an oven at 130°C. At this time, the sample was sandwiched between two sheets of paper in order to prevent a warm current of air from being directly applied to the sample. After the sample was taken out of the oven and cooled, a length (mm) was measured, and a heat shrinkage rate was calculated by the following formula. The measurement was carried out in the MD and the TD, and, in a case of the same value, the value was displayed as a heat shrinkage rate as it is, and, in a case of different values, a higher numerical value was displayed as a heat shrinkage rate.

$$\text{Heat shrinkage rate (\%)} = \{100 - \text{length of sample after heating})/100\} \times 100$$

<Evaluation of Adhesive Force to Electrode>

As an adherend, synthetic graphite (Hitachi Chemical Company, Ltd.) serving as a negative electrode active material, and styrene butadiene rubber and carboxymethylcellulose aqueous solution serving as a binding agent were mixed at a solid weight ratio of 100:1.5:1.8, water serving as a dispersion solvent was added in such a way as to set solid 45 weight%, was further mixed, and a slurry solution was prepared. The slurry solution was applied to both sides of a copper foil serving as a current collecting material having a thickness of 18 $\mu$m, the solvent was dried and removed, the applied copper foil was then subjected to rolling by roll pressing, and a negative electrode sheet in which porosity of a negative electrode mixture portion was adjusted to 40% was acquired. This was cut out into a rectangular shape having a width of 15 mm and a length of 60 mm. Next, the first main surface (main surface having the water contact angle specified in the present invention) of the polyolefin microporous membrane of the present invention in the main surface of the separator for a power storage device, which was acquired in each of Examples and Comparative Examples, and the negative electrode active material of the negative electrode sheet that has been cut out were laminated to face each other, and a laminated body was created. Subsequently, each laminated body was pressed under three level conditions below.

[Table 1]

|  | Pressing pressure | Temperature | Pressing time |
|---|---|---|---|
| Pressurization condition 1 | 17 MPa | 25°C | 3 seconds |
| Pressurization condition 2 | 13 MPa | 30°C | 5 seconds |
| Pressurization condition 3 | 21 MPa | 25°C | 3 seconds |

For each of the pressed laminated bodies, force gauges ZP5N and MX2-500N (product name) by Imada Co., Ltd. (product name) were used for a 90° peel test at a peel rate of 50 mm/min, with a pulling system in which the electrode was anchored and the separator was held and pulled to measure peel strength (N/m). At this time, an average value of the peel strength in the peel test at a length of 40 mm being carried out in the conditions described above was adopted as dry adhesive force (N/m) to the electrode.

The dry adhesive force in the present technique was preferably 0.3 N/m or more, more preferably 0.6 N/m or more, and further preferably 1.0 N/m or more, from a viewpoint of handling in a cell manufacturing step. Further, the dry adhesive force is preferably 4.5 N/m or less, more preferably 4.2 N/m or less, further preferably 4.0 N/m or less, and particularly preferably 3.0 N/m or less, from a viewpoint of inhibiting blocking between separators.

<Injection Property of Electrolyte Solution>

By the same method as the lamination method described in <Evaluation of Adhesive Force to Electrode> described above, each laminated body of the separator for a power storage device being acquired in each of Examples and Comparative Examples and the negative electrode sheet as the adherend was produced. Subsequently, each laminated body was pressed under the following conditions.

[Table 2]

|  | Pressing pressure | Temperature | Pressing time |
|---|---|---|---|
| Pressurization condition 1 | 17 MPa | 25°C | 3 seconds |
| Pressurization condition 2 | 13 MPa | 30°C | 5 seconds |
| Pressurization condition 3 | 21 MPa | 25°C | 3 seconds |

Each pressed laminated body was sandwiched between two glass plates (S1214 by Matsunami Glass Ind., Ltd., size: 76 × 26 mm, thickness: 1.2 to 1.5 mm), anchored with clips (JB34c by Kokuyo Co., double clip (medium), silver, opening width: 25 mm) at both sides and the top, for a total of 3 locations, and then immersed in an electrolyte solution (LBG-00307 by Kishida Chemical Co., Ltd., ethylene carbonate (EC):diethyl carbonate (DEC) = (2:3 volume/volume%)). The portions where the electrolyte solution permeated the separator and the electrode surface were visually observed from the separator side, and the time required for permeation of the total surface was recorded as the injection completion time.

For an on-vehicle cell, time is required for injection as the cell widens, creating a bottleneck in the cell manufacturing step. In order to solve this problem, the injection step is preferably 60 hours or shorter, more preferably 40 hours or shorter, further preferably 25 hours or shorter, and particularly preferably 12 hours or shorter. Assuming an ordinary in-vehicle battery size (for example, a 300 mm width), a power storage device using a separator with an injection completion time of 15 minutes or shorter, being acquired by the present technique in both a laminated body of a positive electrode and a separator and a laminated body of a negative electrode and a separator, has the injection time inhibited to 60 hours or shorter. A power storage device using a separator in which an injection completion time acquired by the present technique is preferably 15 minutes or shorter, more preferably 10 minutes or shorter, further preferably 6 minutes or shorter, and particularly preferably 3 minutes or shorter has satisfactory electrolyte penetration at the interface between the facing positive electrode and negative electrode, and thus the injection property of the cell as a whole improves.

<Battery Test (Cycle Characteristic in Simple Battery)>

(Production of Electrode)

A nickel-manganese-cobalt composite oxide (NMC) (Ni:Mn:Co = 1:1:1 (elemental ratio), density 4.70 g/cm$^3$) serving as a positive electrode active material at a ratio of 90.4 weight%, graphite powder (KS6) (density 2.26 g/cm$^3$, number average particle diameter 6.5 $\mu$m) serving as a conductive auxiliary agent at 1.6 weight%, acetylene black powder (AB) (density 1.95 g/cm$^3$, number average particle diameter 48 nm) serving as a conductive auxiliary agent at 3.8 weight%, and polyvinylidene fluoride (PVdF) (density 1.75 g/cm$^3$) serving as a binder at 4.2 weight% were mixed and dispersed in N-methyl pyrolidone (NMP), and slurry was prepared. The slurry was applied to, by using a die coater, one side of an aluminum foil with a thickness of 20 $\mu$m to be a positive electrode current collecting body, the aluminum foil was dried for 3 minutes at 130°C, and then a positive electrode was produced by compression molding by using a roll pressing machine. A coating amount of the positive electrode active material at this time was 109 g/m$^2$.

Graphite powder A (density 2.23 g/cm3, number average particle diameter 12.7 $\mu$m) serving as a negative electrode active material at a ratio of 87.6 weight%, graphite powder B (density 2.27 g/cm$^3$, number average particle diameter 6.5 $\mu$m) serving as a negative electrode active material at 9.7 weight%, ammonium salt of carboxymethyl cellulose at 1.4 weight% (solid content) (aqueous solution in solid density of 1.83 weight%) serving as a binder, and diene rubber-based latex at 1.7 weight% (solid content) (aqueous solution in solid density of 40 weight%) serving as a binder were dispersed in purified water, and slurry was prepared. The slurry was applied to, by a die coater, one side of a copper foil with a thickness of 12 $\mu$m to be a negative electrode current collecting body, the copper foil was dried for 3 minutes at 120°C, and then a negative electrode was produced by compression molding by using a roll pressing machine. A coating amount of the negative electrode active material at this time was 5.2 g/m$^2$.

(Preparation of Nonaqueous Electrolyte Solution for Cycle Characteristic Testing)

A nonaqueous electrolyte solution was prepared by dissolving LiPF$_6$ as a solute in a mixed solvent of ethylene carbonate:ethyl methyl carbonate = 1:2 (volume ratio) in such a way as to set density of 1.0 mol/L.

(Battery Assembly)

The separator was cut out into a circular shape of 24 mm$\varphi$, and the positive electrode and the negative electrode were each cut out into a circular shape of 16 mm$\varphi$. The negative electrode, the separator, and the positive electrode were laminated in this order in such a way that active material surfaces of the positive electrode and the negative electrode face each other and were housed in a stainless metal container with a lid. The container and the lid were insulated, the container was in contact with the copper foil of the negative electrode, and the lid was in contact with the aluminum foil of the positive electrode. A battery (power storage device) was assembled by injecting a nonaqueous electrolyte solution for cycle characteristic measurement of 0.4 mL into the container and enclosing the container.

(Initial Setting)

First charging after creation of the battery was carried out for a total of about 6 hours by a method for charging the assembled simple battery to a battery voltage of 4.2 V at 25°C at a current value of 3 mA (about 0.5 C), then holding the simple battery at 4.2 V, and starting to reduce the current value from 3 mA. Subsequently, discharging was carried out at the current value of 3 mA up to the current voltage of 3.0 V. Next, charging was carried out for a total of about 3 hours by a method for charging the simple battery to a battery voltage of 4.2 V at 25°C at a current value of 6 mA (about 1.0 C), then holding the simple battery at 4.2 V, and starting to reduce the current value from 6 mA. Subsequently, a discharge capacity when discharging was carried out at the current value of 6 mA up to the current voltage of 3.0 V was set as 1C discharge capacity (mAh). Next, charging was carried out for a total of about 3 hours by a method for charging the simple battery to a battery voltage of 4.2 V at 25°C at a current value of 6 mA (about 1.0 C), then holding the simple battery at 4.2 V, and starting to reduce the current value from 6 mA. Subsequently, a discharge capacity when discharging was carried out at the current value of 12 mA (about 2.0 C) up to the current voltage of 3.0 V was set as 2C discharge capacity (mAh). Then, as desired, a proportion of the 2C discharge capacity to the 1C discharge capacity was calculated, and this value was set as a rate characteristic.

$$\text{Rate characteristic } (\%) = (\text{2C discharge capacity/1C discharge capacity}) \times 100$$

(Cycle Testing)

The battery having the above-described rate characteristic calculated was discharged at a discharge current of 1 C up to a discharge termination voltage of 3 V under a condition of a temperature of 25°C, and was then charged at a charge current of 1 C up to a charge termination voltage of 4.2 V. This was set as 1 cycle and charging and discharging were repeated. Then, a cycle characteristic was evaluated with the following criteria by using a capacity holding rate after 300 cycles with respect to an initial capacity (capacity in a first cycle).

S (significantly satisfactory): capacity maintaining rate of 70% or more
A (satisfactory): capacity maintaining rate of 65% or more and less than 70%
B (good): capacity maintaining rate of 60% or more and less than 65%
C (poor): capacity maintaining rate of less than 60%

<Battery Test (Cycle Characteristic in Wound Battery)>

(Production of Electrode)

A lithium-cobalt composite oxide $LiCoO_2$ serving as a positive electrode active material at 92.2 weight%, scaly graphite and acetylene black each serving as a conductive agent at 2.3 weight%, polyvinylidene fluoride (PVDF) serving as a binder at 3.2 weight% were dispersed in N-methyl pyrolidone (NMP), and slurry was prepared.

The slurry was applied to, by a die coater, one side of an aluminum foil with a thickness of 20 $\mu$m to be a positive electrode current collecting body, and the aluminum foil was dried for 3 minutes at 130°C and then subjected to compression molding by a roll pressing machine. At this time, adjustment was made in such a way that a coating amount of the positive electrode active material was 250 g/m$^2$ and a bulk density of the active material was 3.00 g/cm$^3$. The acquired compressed molded body was cut at a width of about 40 mm and formed into a band shape.

Synthetic graphite serving as a negative electrode active material at 96.9 weight%, ammonium salt of carboxymethyl cellulose serving as a binder at 1.4 weight%, styrene-butadiene copolymer latex serving as a binder at 1.7 weight% were dispersed in purified water, and slurry was prepared. The slurry was applied to, by a die coater, one side of a copper foil with a thickness of 12 $\mu$m to be a negative electrode current collecting body, and the copper foil was dried for 3 minutes at 120°C and then subjected to compression molding by a roll pressing machine. At this time, adjustment was made in such a way that a coating amount of the negative electrode active material was 106 g/m$^2$ and a bulk density of the active material was 1.35 g/cm$^3$. The acquired compressed molded body was cut at a width of about 40 mm and formed into a band shape.

(Preparation of Nonaqueous Electrolyte Solution for Cycle Characteristic Testing)

A nonaqueous electrolyte solution was prepared by dissolving $LiPF_6$ as a solute in a mixed solvent of ethylene carbonate:ethyl methyl carbonate:dimethyl carbonate = 1:1:1 (volume ratio) in such a way as to set density of 1.0 mol/L.

(Winding/Battery Assembly)

The separator formed of the microporous membrane, the above-described band-shaped positive electrode, and the above-described band-shaped negative electrode were laminated in an order of the band-shaped negative electrode, the separator, the band-shaped positive electrode, and the separator, and were wound into a spiral shape for a plurality of times, and thus an electrode plate laminated body was produced.

The electrode plate laminated body was pressed into a flat plate shape and then housed in an aluminum container, and an aluminum lead derived from the positive electrode current collecting body was connected to a container wall, and a nickel lead derived from the negative electrode current collecting body was connected to a container lid terminal portion. Subsequently, the electrode plate laminated body was pressed under the following conditions.

[Table 3]

|  | Pressing pressure | Temperature | Pressing time |
|---|---|---|---|
| Pressurization condition 1 | 17 MPa | 25°C | 3 seconds |
| Pressurization condition 2 | 13 MPa | 30°C | 5 seconds |
| Pressurization condition 3 | 21 MPa | 25°C | 3 seconds |

Furthermore, the above-described nonaqueous electrolyte solution was injected in the container and sealed. An angular lithium-ion battery produced in such a manner was designed in such a way as to have a size at 6.3 mm long (thickness), 30 mm wide, and 48 mm height and have a nominal discharge capacity of 620 mAh.

(Capacity Measurement (mAh))

Constant-current constant-voltage (CCVV) charging was carried out for 6 hours on the lithium-ion battery assembled as described above under conditions of a current value of 310 mA (0.5 C) and a termination battery voltage of 4.2 V.
At this time, the current value immediately before a charge end was a value of almost 0. Subsequently, the battery was left standing (aged) for a week under an atmosphere of 25°C.
Next, a cycle was carried out in which constant-current constant-voltage (CCVV) charging was carried out for 3 hours under conditions of a current value of 620 mA (1.0 C) and a termination battery voltage of 4.2 V, and discharging was carried out at a constant current value (CC) pf 620 mA up to a battery voltage of 3.0 V. A discharge capacity at this time was set as a first discharge capacity X.

(Cycle Testing)

By using the battery assembled as described above, charging and discharging were carried out for a total of 50 times under cycle conditions of (i) constant-current constant-voltage charging for a total of 8 hours with a current amount of 0.5 C and an upper limit voltage of 4.2 V, (ii) a pause for 10 minutes, (iii) constant-current discharging with a current amount of 0.5 C and a termination voltage of 2.5 V, and (iv) a pause for 10 minutes. All of the charging processing and the discharging processing described above were each executed under an atmosphere at 25°C.
Subsequently, a capacity maintaining rate (%) was obtained by multiplying a ratio of a discharge capacity in the 50-th cycle described above to the initial battery capacity X (mAh) described above by 100 times. Note that the capacity maintaining rate was evaluated according to the criteria described below.

    S (significantly satisfactory): capacity maintaining rate of 70% or more
    A (satisfactory): capacity maintaining rate of 65% or more and less than 70%
    B (good): capacity maintaining rate of 60% or more and less than 65%
    C (poor): capacity maintaining rate of less than 60%

<Mean Particle Diameter of Thermoplastic Polymer>

A mean particle diameter of the thermoplastic polymer was measured by using a particle diameter measuring device (Microtrac MT3300EXII by Nikkiso Co., Ltd.). An aqueous dispersion of the thermoplastic polymer particles was prepared (solid concentration: 25 to 30%). Under measuring conditions with a loading index of 0.15 to 0.3 and a measuring time of 300 seconds, a numerical value of the particle diameter with a cumulative frequency of 50% in the acquired data was recorded as a mean particle diameter ($\mu$m), and a mean particle diameter of acrylic polymers 1 to 3 or PVDF described below was also measured.
Note that, when the mean particle diameter of the thermoplastic polymer is observed by using a scanning electron microscope (SEM) (model: S-4800, Hitachi, Ltd.) at a magnification allowing measurement of individual particle diameters (for example, 10,000 times for a thermoplastic polymer of about 0.5 $\mu$m), a mean particle diameter may be calculated by measuring the particle diameters of 100 different thermoplastic polymer particles.

<Basis Weight of Polyolefin Microporous Membrane and Basis Weight Per Side of Thermoplastic Resin Layer>

A 10 cm × 10 cm-square sample (polyolefin porous base material or polyolefin porous base material + inorganic coating layer) was cut out, and a weight was measured by using an AEL-200 electronic scale by Shimadzu Corp. The acquired weight was multiplied by 100 times to calculate a basis weight (g/m$^2$) of the membrane per 1 m$^2$.

A 10 cm × 10 cm-square sample was cut out from a separator including a thermoplastic resin layer formed on a base material, and a weight was measured by using an AEL-200 electronic scale. The acquired weight was multiplied by 100 times to calculate a basis weight (g/m$^2$) of the separator per 1 m$^2$.

The basis weight per side of the thermoplastic resin layer was calculated from a difference in basis weight before and after formation of the thermoplastic resin layer.

Alternatively, the basis weight per side of the thermoplastic resin layer can be determined by peeling off the thermoplastic resin layer from the surface of a 10 cm×10 cm-square sample and calculating a weight reduction (of the peeled sample) by using a thermogravimetric differential thermal analyzer (NEXTA STA 200RV by Hitachi High-Tech Science, Ltd.), or calculating a change in weight before and after peeling.

<Glass Transition Temperature (°C) of Thermoplastic Polymer>

A sufficient amount of the thermoplastic polymer coating solution (nonvolatile content = 30%) was placed in an aluminum tray and dried for 30 minutes in a hot air drier at 130°C. About 17 mg of the dried film after drying was packed into a measuring aluminum container, and the DSC curve and DDSC curve were acquired by using a DSC measuring device (DSC6220 by Shimadzu Corp.) under a nitrogen atmosphere. Measuring conditions were as follows.

(First stage temperature increase program)

70°C start, temperature increase at 15°C/minute. The temperature was maintained for 5 minutes after reaching 110° C.

(Second stage temperature decrease program)

Temperature decrease from 110°C at 40°C/minute. The temperature was maintained for 5 minutes after reaching -50°C.

(Third stage temperature increase program)

Temperature increase from -50°C to 130°C at 15°C/minute. Recording of DSC and DDSC data during the third stage heating.

An intersection between the baseline (an extended straight line toward the high-temperature end from the baseline of the acquired DSC curve) and the tangent line at the inflection point (the point where the upwardly convex curve changed to a downwardly convex curve) was recorded as the glass transition temperature (Tg).

<Measurement of Absorption Peak Height and Ratio by ATR-IR Measurement>

The polyolefin microporous membrane or the separator for a power storage device being acquired in each of Examples and Comparative Examples was cut out in a size of 10 mm × 10 mm, absorbance of the first main surface in 600 to 4,000 cm$^{-1}$ was measured by using a Fourier transform infrared spectrophotometer (670-IR by Varian Medical Systems, Inc.), ATR-unit (Golden Gate by Specac Ltd.), and diamond for ATR crystals. An incidence angle during measurement was 45°, a wave resolution was 4 cm$^{-1}$, and an accumulated number of times was 128 times. An IR spectrum of vapor being measured in addition to a sample was added to or subtracted from an IR spectrum for measuring the sample, in such a way as to set, to zero, a peak derived from vapor in the IR spectrum for measuring the sample.

An absorption peak height $\alpha$ near 1,715 cm$^{-1}$ derived from a carbonyl group and an absorption peak height $\beta$ in 1,472 cm$^{-1}$ derived from polyethylene were calculated by using analysis software "Agilent Resolution Pro" for the acquired spectrum. The ratio $\alpha/\beta$ could also be calculated. Note that, when a peak of the carbonyl group was not observed in the ATR-IR measurement, the above-described ratio was indicated as 0.0000 in Table 4 below.

<Measurement of Indentation Elastic Modulus and Indentation Depth After Unloading>

The polyolefin microporous membrane or the separator for a power storage device being acquired in each of Examples and Comparative Examples was cut out in a size of 10 mm × 10 mm, a glass plate (slide glass 1202 (water edge polish) by Muto Pure Chemicals Co., Ltd., size: 76 mm × 26 mm, thickness: 1.3 mm ± 0.05 mm) was attached to the opposite side from the measuring side by using liquid glue (Arabic Yamato by Yamato Co., Ltd., NW-15) diluted with water by 2 times (weight ratio) to produce a measuring sample. An indentation elastic modulus at three places and an indentation depth after unloading were measured in different conditions below by using a micro hardness tester (dynamic ultra micro hardness tester by Shimadzu Corporation, model: DUH-211S), and each average value was adopted.

- Kind of indenter: Triangular115
- Magnification of object lens: 50 times
- Indenter elastic modulus: $1.14 \times 10^6 N/mm^2$
- Indenter Poisson ratio: 0.07
- Testing mode: load-unload testing
- Testing force: 2 mN
- Minimum testing force: 0.02 mN
- Load speed 1 (1.4632 mN/sec)
- Load retention time: 0 sec
- Unload retention time: 0 sec

<Coating Solution for Formation of Thermoplastic Resin Layer>

The following coating solutions for formation of a thermoplastic resin layer were prepared.

-Acrylic Polymer 1

An acrylic latex with a high Tg (Tg = 62°C) and an acrylic latex with a low Tg (Tg < 20°C) were blended, and latex blend slurry (acrylic polymer 1, mean particle diameter: 0.5 μm) was prepared by using water as a solvent.

-Acrylic Polymer 2

An acrylic latex with a high Tg (Tg = 61°C) and an acrylic latex with a low Tg (Tg < 20°C) were blended, and latex blend slurry (acrylic polymer 2, mean particle diameter: 0.35 μm) was prepared by using water as a solvent.

-Acrylic Polymer 3

An acrylic latex with a high Tg (Tg = 94°C) and an acrylic latex with a low Tg (Tg < 20°C) were blended, and latex blend slurry (acrylic polymer 3, mean particle diameter: 0.36 μm) was prepared by using water as a solvent.

-PVDF

Commercially available polyvinylidene fluoride (PVDF-HFP copolymer, Tm = 150°C, mean particle diameter: 0.2 μm) was prepared. For coating, slurry was prepared by admixture of the PVDF-HFP copolymer with the acrylic latex (Tg < 20°C) in an amount sufficient to ensure binding force after coating (PVDF: acrylic polymer = 4:1 to 10:1, as solid weight ratio), and was used.

<Coating Solution for Formation of Inorganic Coating Layer>

A coating solution including predetermined inorganic particles and a resin binder was prepared.

<Membrane Formation Example>

High-density polyethylene homopolymer with an Mv of 700,000, at 47 parts by weight, high-density polyethylene homopolymer with an Mv of 300,000, at 46 parts by weight, and polypropylene homopolymer with an Mv of 700,000, at 7 parts by weight, were dry blended by using a tumbler blender. To 99 parts by weight of the acquired polyolefin mixture was added 1 part by weight of tetrakis-[methylene-(3',5'-di-t-butyl-4'-hydroxyphenyl)propionate]methane as an antioxidant, and a tumbler blender was again used for dry blending to acquire a mixture. The acquired mixture was supplied to a twin-screw extruder by using a feeder under a nitrogen atmosphere. Liquid paraffin (kinematic viscosity at 37.78°C: 7.59 × $10^{-5} m^2/s$) was injected into the extruder cylinder by a plunger pump. The operating conditions for the feeder and the pump were adjusted for a liquid paraffin content of 68 parts by weight, i.e., a polymer concentration of 32 parts by weight, in the total mixture to be extruded.

Next, the contents were melt kneaded in the twin-screw extruder while heating to 160°C, the acquired melt-kneaded mixture was extruded through a T-die onto a cooling roll controlled to a surface temperature of 80°C, and the extruded mixture was contacted with a cooling roll for casting and cooled to solidification to acquire a cast sheet. The sheet was then drawn under conditions with a factor of $7 \times 6.4$ and a temperature of 122°C by using a simultaneous biaxial drawing machine, and the drawn sheet was immersed in methylene chloride for extraction removal of the liquid paraffin and then dried and drawn by a factor of 1.85 in the transverse direction by using a tenter drawing machine at a heat setting temperature of 132°C. The drawn sheet was then relaxed to about 10% in the width direction and subjected to heat treatment to acquire a polyolefin microporous membrane 1A.

The physical properties (membrane thickness, basis weight, porosity, heat shrinkage rate at 130°C, water contact angle, ratio of carbonyl absorption peak height, indentation elastic modulus, and the like) of the acquired polyolefin microporous membrane 1A were measured by the methods described above as necessary.

<Manufacturing of Polyolefin Microporous Membrane>

A plurality of polyolefin microporous membranes 2A to 8A having a thickness, a basis weight, and a porosity as shown in Table 4 were acquired in the same manner as the membrane formation example of 1A, except that a heat setting temperature was changed to adjust the physical properties (membrane thickness, basis weight, porosity, air permeability, heat shrinkage rate at 130°C, a ratio of a carbonyl absorption peak height, an indentation elastic modulus, and the like) as shown in Table 4.

<Surface Treatment for Main Surface to be First Main Surface of Polyolefin Microporous Membrane>

When corona discharge treatment was carried out as surface treatment on one main surface (main surface to be the first main surface of the polyolefin microporous membrane of the present invention) of the acquired polyolefin microporous membranes 1A to 7A as necessary, the corona discharge treatment was carried out under conditions of a discharge amount (unit: W/(m$^2$/min.) shown in Table 4 by using a corona discharge treatment device. For a surface treated surface or a non-treated surface by the corona discharge treatment and the like, results of measuring a water contact angle, an indentation elastic modulus, a ratio of a carbonyl absorption peak height are shown in Table 4.

<Formation of First Coating Layer on Polyolefin Microporous Membrane>

When the first coating layer is formed as necessary on the first main surface of the polyolefin microporous membranes 1A to 7A constituting the separator, coating was carried out in such a way as to satisfy a water contact angle and a coverage area ratio of the first coating layer as shown in Table 4. In the present example, for the formation of the first coating layer, as shown in Table 4, the coating solution for formation of the thermoplastic resin layer prepared as described above was used, applied to the first main surface by gravure printing, and dried at 40°C to remove water in the coating solution, and the thermoplastic resin layer being the first coating layer was formed on the first main surface of the polyolefin microporous membrane.

<Formation of Second Coating Layer on Polyolefin Microporous Membrane>

As desired, an inorganic coating layer including inorganic particles and a resin binder may be formed on a non-treated surface of the polyolefin microporous membranes 1A to 8A shown in Table 4 (second main surface of the polyolefin microporous membrane of the present invention) (inorganic coating layer thickness of 2 $\mu$m). For formation of the inorganic coating layer, the corona discharge treatment was carried out with a discharge amount of 10 W/(m$^2$/min.) on the second main surface, the coating solution prepared as described above was then used and applied by gravure printing to the second main surface subjected to the corona discharge treatment, in such a way that a thickness of the inorganic coating layer after drying was set as a thickness of the inorganic coating layer shown in Table 4, and the coating solution was dried at 60°C to remove a solvent, and the inorganic coating layer was formed. Subsequently, under a condition that the second coating layer has a coverage area ratio shown in Table 4, the coating solution shown in Table 4 was applied by gravure printing to the inorganic coating layer side of the polyolefin microporous membrane or the second main surface (non-treated surface in a case of no inorganic coating layer), and was dried at 40°C to remove water in the coating solution, and the separator for a power storage device including the thermoplastic resin layer on at least one side of the polyolefin microporous membrane was acquired.

The acquired separator was evaluated by the methods described above. The acquired results are also shown in Table 4.

<Examples 1 to 44, Comparative Examples 1 to 21>

As shown in Table 4, each separator for a power storage device was acquired by changing a type of the polyolefin microporous membrane, a discharge amount, a type of the thermoplastic polymer, a coverage area ratio, presence or absence of coating for the corona discharge treatment surface, a coating condition for the corona discharge treatment surface, presence or absence of the inorganic coating layer, and the like.

The acquired separator was evaluated by the methods described above. For an injection completion time, dry adhesive force, and a contact angle, each value of a surface with a longer injection completion time when the injection completion time was measured for each side of the separator by the method described under <Injection Property of Electrolyte Solution> described above was adopted. The acquired results are shown in Table 4.

Note that, in Comparative Examples 1 to 20 and Examples 1 to 26, coating for the polyolefin microporous membrane was not carried out. Further, in Comparative Examples 1 to 9, Comparative Examples 16 to 20, and Example 26, corona discharge treatment for the polyolefin microporous membrane was not carried out. In Examples 20 to 26 and Comparative Examples 16 to 19, each of plasma treatment and fluorine treatment was carried out instead of the corona discharge treatment of the polyolefin microporous membrane.

In Comparative Example 20, a contact angle was adjusted by polishing five times in the MD of the polyolefin microporous membrane by using #1,000 sandpaper.

In Examples 27 to 34, the thermoplastic polymer layer was formed on the corona discharge treatment surface of the polyolefin microporous membrane, and then the type of the thermoplastic polymer was changed in Examples 35 to 37.

In Example 38, the inorganic coating layer including the inorganic particles and the resin binder was formed on the non-corona discharge treatment surface of the polyolefin microporous membrane.

In Examples 39, the inorganic coating layer including the inorganic particles and the resin binder was formed on the non-corona discharge treatment surface of the polyolefin microporous membrane, whereas the thermoplastic polymer layer was formed on the corona discharge treatment surface.

In Example 40, the inorganic coating layer including the inorganic particles and the resin binder was formed on the non-corona discharge treatment surface of the polyolefin microporous membrane, and, furthermore, the thermoplastic polymer layer was formed on the inorganic coating layer.

In Example 41, the inorganic coating layer including the inorganic particles and the resin binder was formed on the non-corona discharge treatment surface of the polyolefin microporous membrane, and, furthermore, the thermoplastic polymer layer was formed on the inorganic coating layer, whereas the thermoplastic polymer layer was also formed on the corona discharge treatment surface of the polyolefin microporous membrane.

In Examples 42 and 43, a battery was disassembled after a cycle measurement of Examples 38 and 40, and a contact angle and an absorption peak ratio by the ATR-IR measurement were measured.

Cycle testing was carried out in a simple battery except for Example 44 and Comparative Example 21, and cycle testing was carried out in a wound battery in Example 44 and Comparative Example 21. The separator in Example 44 was adjusted in the same condition as Example 38, and the separator in Comparative Example 21 was acquired by providing the inorganic coating layer to the separator in Comparative Example 4.

For dry adhesive force in Example 33 and Comparative Example 21, a wound body before injection of an electrolyte solution was pulled out and unwound, and dry adhesive force between the separator and the negative electrode was measured similarly to Examples 1 to 41.

Furthermore, for an injection property of an electrolyte solution in Example 44 and Comparative Example 21, a wound body before injection of the electrolyte solution was pulled out and unwound, and a sample was adjusted by peeling the positive electrode. Next, the injection property was measured similarly to Examples 1 to 41 by using a laminated body of the separator and the negative electrode being acquired from the adjusted sample.

[Table 4-1]

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Polyolefin microporous membrane type | 5A | 4A | 6A | 1A | 8A | 2A | 3A | 7A | 1A |
| Heat setting temperature in manufacturing of polyolefin microporous membrane (°C) | 134 | 133 | 132.5 | 132 | 131 | 130 | 128 | 127 | 132 |
| Thickness of polyolefin microporous membrane ($\mu$m) | 10 | 6 | 15 | 12 | 15 | 30 | 15 | 12 | 12 |
| Basis weight of polyolefin microporous membrane (g/m$^2$) | 6.3 | 3.5 | 8.6 | 6.3 | 10.5 | 13.8 | 6.3 | 3.9 | 6.3 |
| Porosity of polyolefin microporous membrane (%) | 29 | 34 | 38 | 44 | 46 | 51 | 57 | 66 | 44 |
| Thickness of inorganic coating layer ($\mu$m) | - | - | - | - | - | - | - | - | - |
| $R_{expose}$ (area%) | 100 | 100 | 100 | 100 | 100 | 100 | 100 | 100 | 100 |
| Total coverage area ratio of thermoplastic resin layer of first coating layer (area%) | - | - | - | - | - | - | - | - | - |

EP 4 645 567 A1

(continued)

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Total coverage area ratio of thermoplastic resin layer of second coating layer (area%) | - | - | - | - | - | - | - | - | - |
| Coating solution for formation of thermoplastic resin layer | - | - | - | - | - | - | - | - | - |
| Water contact angle (°) | 118 | 118 | 118 | 118 | 118 | 118 | 118 | 118 | 95 |
| Discharge amount [W/(m²/min.)] | - | - | - | - | - | - | - | - | - |
| Ratio of absorption peak heights by ATR-IR measurement | 0.0000 | 0.0000 | 0.0000 | 0.0000 | 0.0000 | 0.0000 | 0.0000 | 0.0000 | 0.0000 |
| Indentation elastic modulus (N/mm²) | 58923 | 50677 | 42205 | 33210 | 29711 | 19536 | 11789 | 9972 | 33250 |
| Heat chrinkage rate at 130°C (%) | 20 | 22 | 23 | 28 | 32 | 34 | 41 | 49 | 27 |
| Dry adhesive force (N/m) pressurization condition 1 | 0.1 | 0.3 | 0.6 | 0.8 | 0.9 | 1.0 | 1.5 | 1.8 | 0.8 |

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Dry adhesive force (N/m) pressurization condition 2 | 0.1 | 0.4 | 0.5 | 0.8 | 0.9 | 0.9 | 1.6 | 1.8 | 0.7 |
| Drv adhesive force (N/m) pressurization condition 3 | 0.1 | 0.5 | 0.7 | 0.9 | 1.1 | 1.2 | 1.7 | 1.9 | 0.7 |
| Injection completion time (min) pressurization condition 1 | 2 | 2 | 3 | 3 | 3 | 4 | 6 | 10 | 3 |
| Injection completion time (min) pressurization condition 2 | 2 | 2 | 3 | 3 | 3 | 3 | 5 | 9 | 3 |
| Injection completion time (min) pressurization condition 3 | 2 | 2 | 3 | 3 | 3 | 4 | 6 | 10 | 3 |
| Cycle characteristic (%) | 65 | 66 | 66 | 65 | 65 | 65 | 65 | 66 | 66 |
| Cycle characteristic (evaluation) | A | A | A | A | A | A | A | A | A |

EP 4 645 567 A1

39

[Table 4-2]

| | Comparative Example 10 | Example 1 | Example 2 | Example 3 | Example 4 | Example 5 | Example 6 | Comparative Example 11 |
|---|---|---|---|---|---|---|---|---|
| Polyolefin microporous membrane type | 5A | 4A | 6A | 1A | 8A | 2A | 3A | 7A |
| Heat setting temperature in manufacturing of polyolefin microporous membrane (°C) | 134 | 133 | 132.5 | 132 | 131 | 130 | 128 | 127 |
| Thickness of polyolefin microporous membrane ($\mu$m) | 10 | 6 | 15 | 12 | 15 | 30 | 15 | 12 |
| Basis weight of polyolefin microporous membrane (g/m$^2$) | 6.3 | 3.5 | 8.6 | 6.3 | 10.5 | 13.8 | 6.3 | 3.9 |
| Porosity of polyolefin microporous membrane (%) | 29 | 34 | 38 | 44 | 46 | 51 | 57 | 66 |
| Thickness of inorganic coating layer ($\mu$m) | - | - | - | - | - | - | - | - |
| $R_{expose}$ (area%) | 100 | 100 | 100 | 100 | 100 | 100 | 100 | 100 |
| Total coverage area ratio of thermoplastic resin layer of first coating layer (area%) | - | - | - | - | - | - | - | - |
| Total coverage area ratio of thermoplastic resin layer of second coating layer (area%) | - | - | - | - | - | - | - | - |
| Coating solution for formation of thermoplastic resin layer | - | - | - | - | - | - | - | - |
| Water contact angle (°) | 105 | 105 | 105 | 105 | 105 | 105 | 105 | 105 |

(continued)

|  | Comparative Example 10 | Example 1 | Example 2 | Example 3 | Example 4 | Example 5 | Example 6 | Comparative Example 11 |
|---|---|---|---|---|---|---|---|---|
| Discharge amount [W/(m$^2$/min.)] | 5.8 | 5.8 | 5.8 | 5.8 | 5.8 | 5.8 | 5.8 | 5.8 |
| Ratio of absorption peak heights by ATR-IR measurement | 0.0060 | 0.0060 | 0.0060 | 0.0039 | 0.0060 | 0.0060 | 0.0060 | 0.0060 |
| Indentation elastic modulus (N/mm$^2$) | 58911 | 56500 | 42214 | 32215 | 29845 | 19544 | 11777 | 9980 |
| Heat shrinkage rate at 130°C (%) | 20 | 23 | 22 | 28 | 32 | 35 | 40 | 50 |
| Dry adhesive force (N/m) pressurization condition 1 | 0.5 | 2.1 | 2.1 | 2.2 | 2.3 | 2.6 | 2.9 | 3.2 |
| Dry adhesive force (N/m) pressurization condition 2 | 0.5 | 2.0 | 2.1 | 2.2 | 2.4 | 2.5 | 3.0 | 3.0 |
| Dry adhesive force (N/m) pressurization condition 3 | 0.6 | 2.4 | 2.5 | 2.6 | 2.8 | 3.0 | 3.5 | 3.3 |
| Injection completion time (min) pressurization condition 1 | 2 | 2 | 3 | 3 | 3 | 4 | 5 | 9 |
| Injection completion time (min) pressurization condition 2 | 2 | 2 | 2 | 3 | 3 | 4 | 5 | 8 |
| Injection completion time (min) pressurization condition 3 | 3 | 3 | 4 | 3 | 3 | 4 | 5 | 9 |
| Cycle characteristic (%) | 68 | 69 | 68 | 66 | 66 | 66 | 66 | 65 |
| Cycle characteristic (evaluation) | A | A | A | A | A | A | A | A |

[Table 4-3]

| | Comparative Example 12 | Example 7 | Example 8 | Example 9 | Example 10 | Example 11 | Example 12 | Comparative Example 13 |
|---|---|---|---|---|---|---|---|---|
| Polyolefin microporous membrane type | 5A | 4A | 6A | 1A | 8A | 2A | 3A | 7A |
| Heat setting temperature in manufacturing of polyolefin microporous membrane (°C) | 134 | 133 | 132.5 | 132 | 131 | 130 | 128 | 127 |
| Thickness of polyolefin microporous membrane ($\mu$m) | 10 | 6 | 15 | 12 | 15 | 30 | 15 | 12 |
| Basis weight of polyolefin microporous membrane (g/m$^2$) | 6.3 | 3.5 | 8.6 | 6.3 | 10.5 | 13.8 | 6.3 | 3.9 |
| Porosity of polyolefin microporous membrane (%) | 29 | 34 | 38 | 44 | 46 | 51 | 57 | 66 |
| Thickness of inorganic coating layer ($\mu$m) | - | - | - | - | - | - | - | - |
| $R_{expose}$ (area%) | 100 | 100 | 100 | 100 | 100 | 100 | 100 | 100 |
| Total coverage area ratio of thermoplastic resin layer of first coating layer (area%) | - | - | - | - | - | - | - | - |
| Total coverage area ratio of thermoplastic resin layer of second coating layer (area%) | - | - | - | - | - | - | - | - |
| Coating solution for formation of thermoplastic resin layer | - | - | - | - | - | - | - | - |
| Water contact angle (°) | 100 | 100 | 100 | 100 | 100 | 100 | 100 | 100 |

(continued)

|  | Comparative Example 12 | Example 7 | Example 8 | Example 9 | Example 10 | Example 11 | Example 12 | Comparative Example 13 |
|---|---|---|---|---|---|---|---|---|
| Discharge amount [W/(m$^2$/min.)] | 17.9 | 17.9 | 17.9 | 17.9 | 17.9 | 17.9 | 17.9 | 17.9 |
| Ratio of absorption peak heights by ATR-IR measurement | 0.0090 | 0.0090 | 0.0090 | 0.0090 | 0.0090 | 0.0090 | 0.0090 | 0.0090 |
| Indentation elastic modulus (N/mm$^2$) | 58901 | 50666 | 42211 | 32060 | 29900 | 19544 | 11757 | 9960 |
| Heat shrinkage rate at 130°C (%) | 20 | 22 | 23 | 28 | 31 | 35 | 40 | 48 |
| Dry adhesive force (N/m) pressurization condition 1 | 0.7 | 2.2 | 2.3 | 2.5 | 2.8 | 3.1 | 4.7 | 5.2 |
| Dry adhesive force (N/m) pressurization condition 2 | 0.7 | 2.3 | 2.3 | 2.6 | 2.8 | 3.0 | 4.8 | 5.0 |
| Dry adhesive force (N/m) pressurization condition 3 | 0.9 | 2.5 | 2.7 | 3.0 | 3.2 | 3.6 | 5.2 | 5.4 |
| Injection completion time (min) pressurization condition 1 | 4 | 2 | 4 | 5 | 6 | 6 | 5 | 14 |
| Injection completion time (min) pressurization condition 2 | 4 | 3 | 4 | 5 | 6 | 6 | 6 | 13 |
| Injection completion time (min) pressurization condition 3 | 4 | 3 | 5 | 6 | 7 | 7 | 7 | 15 |
| Cycle characteristic (%) | 69 | 69 | 69 | 69 | 69 | 69 | 69 | 65 |
| Cycle characteristic (evaluation) | A | A | A | A | A | A | A | A |

[Table 4-4]

| | Comparative Example 4 | Comparative Example 14 | Example 13 | Example 14 | Example 3 | Example 15 | Example 16 | Example 17 | Example 9 |
|---|---|---|---|---|---|---|---|---|---|
| Polyolefin microporous membrane type | 1A | 1A | 1A | 1A | 1A | 1A | 1A | 1A | 1A |
| Heat setting temperature in manufacturing of polyolefin microporous membrane (°C) | 132 | 132 | 132 | 132 | 132 | 132 | 132 | 132 | 132 |
| Thickness of polyolefin microporous membrane (μm) | 12 | 12 | 12 | 12 | 12 | 12 | 12 | 12 | 12 |
| Basis weight of polyolefin microporous membrane (g/m$^2$) | 6.3 | 6.3 | 6.3 | 6.3 | 6.3 | 6.3 | 6.3 | 6.3 | 6.3 |
| Porosity of polyolefin microporous membrane (%) | 44 | 44 | 44 | 44 | 44 | 44 | 44 | 44 | 44 |
| Thickness of inorganic coating layer (μm) | - | - | - | - | - | - | - | - | - |
| $R_{expose}$ (area%) | 100 | 100 | 100 | 100 | 100 | 100 | 100 | 100 | 100 |
| Total coverage area ratio of thermoplastic resin layer of first coating layer (area%) | - | - | - | - | - | - | - | - | - |
| Total coverage area ratio of thermoplastic resin layer of second coating layer (area%) | - | - | - | - | - | - | - | - | - |
| Coating solution for formation of thermoplastic resin layer | - | - | - | - | - | - | - | - | - |
| Water contact angle (°) | 118 | 115 | 109 | 107 | 105 | 106 | 102 | 101 | 100 |
| Discharge amount [W/(m$^2$/min.)] | - | 0.9 | 1.7 | 2.3 | 5.8 | 2.8 | 13.2 | 15.9 | 17.9 |
| Ratio of absorption peak heights by ATR-IR measurement | 0.0000 | 0.0010 | 0.0021 | 0.0023 | 0.0039 | 0.0028 | 0.0060 | 0.0080 | 0.0090 |
| Indentation elastic modulus (N/mm$^2$) | 33210 | 31746 | 32005 | 32088 | 32215 | 31235 | 32050 | 32116 | 32060 |

(continued)

| | Comparative Example 4 | Comparative Example 14 | Example 13 | Example 14 | Example 3 | Example 15 | Example 16 | Example 17 | Example 9 |
|---|---|---|---|---|---|---|---|---|---|
| Heat shrinkage rate at 130°C (%) | 28 | 28 | 28 | 28 | 28 | 28 | 28 | 28 | 28 |
| Dry adhesive force (N/m) pressurization condition 1 | 0.8 | 1.0 | 2.0 | 2.0 | 2.2 | 2.1 | 2.3 | 2.2 | 2.5 |
| Dry adhesive force (N/m) pressurization condition 2 | 0.8 | 1.0 | 2.0 | 2.1 | 2.2 | 2.2 | 2.2 | 2.2 | 2.6 |
| Dry adhesive force (N/m) pressurization condition 3 | 0.9 | 1.2 | 2.5 | 2.5 | 2.6 | 2.6 | 2.8 | 2.4 | 3.0 |
| Injection completion time (min) pressurization condition 1 | 3 | 3 | 3 | 3 | 3 | 3 | 4 | 4 | 5 |
| Injection completion time (min) pressurization condition 2 | 3 | 3 | 3 | 3 | 3 | 3 | 4 | 3 | 5 |
| Injection completion time (min) pressurization condition 3 | 3 | 3 | 3 | 3 | 3 | 3 | 4 | 4 | 6 |
| Cycle characteristic (%) | 65 | 65 | 66 | 67 | 66 | 67 | 68 | 69 | 69 |
| Cycle characteristic (evaluation) | A | A | A | A | A | A | A | A | A |

[Table 4-5]

| | Example 18 | Example 19 | Example 20 | Example 21 | Example 22 | Comparative Example 15 |
|---|---|---|---|---|---|---|
| Polyolefin microporous membrane type | 1A | 1A | 1A | 1A | 1A | 1A |
| Heat setting temperature in manufacturing of polyolefin microporous membrane (°C) | 132 | 132 | 132 | 132 | 132 | 132 |
| Thickness of polyolefin microporous membrane ($\mu$m) | 12 | 12 | 12 | 12 | 12 | 12 |
| Basis weight of polyolefin microporous membrane (g/m$^2$) | 6.3 | 6.3 | 6.3 | 6.3 | 6.3 | 6.3 |
| Porosity of polyolefin microporous membrane (%) | 44 | 44 | 44 | 44 | 44 | 44 |
| Thickness of inorganic coating layer ($\mu$m) | - | - | - | - | - | - |
| $R_{expose}$ (area%) | 100 | 100 | 100 | 100 | 100 | 100 |
| Total coverage area ratio of thermoplastic resin layer of first coating layer (area%) | - | - | - | - | - | - |
| Total coverage area ratio of thermoplastic resin layer of second coating layer (area%) | - | - | - | - | - | - |
| Coating solution for formation of thermoplastic resin layer | - | - | - | - | - | - |
| Water contact angle (°) | 98 | 85 | 71 | 62 | 51 | 42 |
| Discharge amount [W/(m$^2$/min.)] | 35.7 | 57 | 150 | 250 | 300 | 900 |
| Ratio of absorption peak heights by ATR-IR measurement | 0.0130 | 0.0150 | 0.0220 | 0.0270 | 0.0310 | 0.0590 |
| Indentation elastic modulus (N/mm$^2$) | 31899 | 31415 | 32418 | 32191 | 32750 | 32514 |
| Heat shrinkage rate at 130°C (%) | 28 | 28 | 28 | 28 | 28 | 28 |
| Dry adhesive force (N/m) pressurization condition 1 | 3.0 | 3.9 | 4.1 | 4.2 | 4.3 | 4.7 |
| Dry adhesive force (N/m) pressurization condition 2 | 3.0 | 3.8 | 4.0 | 4.2 | 4.4 | 4.7 |
| Dry adhesive force (N/m) pressurization condition 3 | 3.6 | 4.7 | 5.1 | 5.3 | 5.8 | 5.0 |
| Injection completion time (min) pressurization condition 1 | 7 | 8 | 9 | 9 | 10 | 12 |
| Injection completion time (min) pressurization condition 2 | 7 | 7 | 9 | 9 | 9 | 12 |

(continued)

| | Example 18 | Example 19 | Example 20 | Example 21 | Example 22 | Comparative Example 15 |
|---|---|---|---|---|---|---|
| Injection completion time (min) pressurization condition 3 | 7 | 7 | 10 | 10 | 10 | 13 |
| Cycle characteristic (%) | 69 | 64 | 64 | 62 | 61 | 55 |
| Cycle characteristic (evaluation) | A | B | B | B | B | C |

[Table 4-6]

| | Example 23 | Example 24 | Example 25 | Comparative Example 16 | Comparative Example 17 | Comparative Example 18 | Comparative Example 19 | Example 26 | Comparative Example 20 |
|---|---|---|---|---|---|---|---|---|---|
| Polyolefin microporous membrane type | 2A | 3A | 4A | 1A | 1A | 1A | 1A | 1A | 1A |
| Heat setting temperature in manufacturing of polyolefin microporous membrane (°C) | 130 | 128 | 133 | 132 | 132 | 132 | 132 | 132 | 132 |
| Thickness of polyolefin microporous membrane ($\mu$m) | 30 | 15 | 6 | 12 | 12 | 12 | 12 | 12 | 12 |
| Basis weight of polyolefin microporous membrane (g/m²) | 13.8 | 6.3 | 3.5 | 6.3 | 6.3 | 6.3 | 6.3 | 6.3 | 6.3 |
| Porosity of polyolefin microporous membrane (%) | 51 | 57 | 34 | 44 | 44 | 44 | 44 | 44 | 44 |
| Thickness of inorganic coating layer ($\mu$m) | - | - | - | - | - | - | - | - | - |
| $R_{expose}$ (area%) | 100 | 100 | 100 | 100 | 100 | 100 | 100 | 100 | 100 |
| Total coverage area ratio of thermoplastic resin layer of first coating layer (area%) | - | - | - | - | - | - | - | - | - |
| Total coverage area ratio of thermoplastic resin layer of second coating layer (area%) | - | - | - | - | - | - | - | - | - |
| Coating solution for formation of thermoplastic resin layer | - | - | - | - | - | - | - | - | - |
| Water contact angle (°) | 103 | 100 | 102 | 55 | 80 | 100 | 110 | 105 | 115 |
| Discharge amount [W/(m²/min.)] | 7.4 | 7.4 | 7.4 | - | - | - | - | - | - |
| Ratio of absorption peak heights by ATR-IR measurement | 0.0060 | 0.0060 | 0.0060 | 0.0290 | 0.0354 | 0.0387 | 0.0392 | 0.0030 | 0.0000 |
| Indentation elastic modulus (N/mm²) | 20516 | 12011 | 49987 | 31848 | 31828 | 31886 | 32456 | 31679 | 32664 |
| Heat shrinkage rate at 130°C (%) | 34 | 41 | 22 | 28 | 25 | 23 | 22 | 28 | 28 |

(continued)

| | Example 23 | Example 24 | Example 25 | Comparative Example 16 | Comparative Example 17 | Comparative Example 18 | Comparative Example 19 | Example 26 | Comparative Example 20 |
|---|---|---|---|---|---|---|---|---|---|
| Dry adhesive force (N/m) pressurization condition 1 | 1.6 | 2.1 | 0.8 | 4.1 | 1.9 | 1.5 | 1.3 | 1.2 | 0.8 |
| Dry adhesive force (N/m) pressurization condition 2 | 1.5 | 2.0 | 0.9 | 4.2 | 2.0 | 1.6 | 1.3 | 1.3 | 0.7 |
| Dry adhesive force (N/m) pressurization condition 3 | 1.8 | 2.5 | 1.2 | 4.5 | 2.4 | 1.9 | 1.6 | 1.5 | 1.2 |
| Injection completion time (min) pressurization condition 1 | 4 | 6 | 2 | 10 | 11 | 10 | 9 | 3 | 15 |
| Injection completion time (min) pressurization condition 2 | 4 | 5 | 2 | 11 | 10 | 11 | 9 | 3 | 16 |
| Injection completion time (min) pressurization condition 3 | 4 | 6 | 2 | 10 | 10 | 11 | 9 | 3 | 14 |
| Cycle characteristic (%) | 65 | 66 | 65 | 64 | 63 | 62 | 63 | 66 | 55 |
| Cycle characteristic (evaluation) | A | A | A | B | B | B | B | A | C |

[Table 4-7]

| | Example 27 | Example 28 | Example 29 | Example 30 | Example 31 | Example 32 | Example 33 | Example 34 |
|---|---|---|---|---|---|---|---|---|
| Polyolefin microporous membrane type | 1A | 1A | 1A | 1A | 1A | 1A | 1A | 1A |
| Heat setting temperature in manufacturing of polyolefin microporous membrane (°C) | 132 | 132 | 132 | 132 | 132 | 132 | 132 | 132 |
| Thickness of polyolefin microporous membrane (μm) | 12 | 12 | 12 | 12 | 12 | 12 | 12 | 12 |
| Basis weight of polyolefin microporous membrane (g/m$^2$) | 6.3 | 6.3 | 6.3 | 6.3 | 6.3 | 6.3 | 6.3 | 6.3 |
| Porosity of polyolefin microporous membrane (%) | 44 | 44 | 44 | 44 | 44 | 44 | 44 | 44 |
| Thickness of inorganic coating layer (μm) | - | - | - | - | - | - | - | - |
| $R_{expose}$ (area%) | 99.4 | 99.0 | 98.1 | 95.4 | 85.3 | 61 | 45 | 33 |
| Total coverage area ratio of thermoplastic resin layer of first coating layer (area%) | 0.6 | 1.0 | 1.9 | 4.6 | 14.7 | 39 | 55 | 67 |
| Total coverage area ratio of thermoplastic resin layer of second coating layer (area%) | - | - | - | - | - | - | - | - |
| Coating solution for formation of thermoplastic resin layer | Acrylic polymer 1 | Acrylic polymer 1 | Acrylic polymer 1 | Acrylic polymer 1 | Acrylic polymer 1 | Acrylic polymer 1 | Acrylic polymer 1 | Acrylic polymer 1 |

(continued)

| | Example 27 | Example 28 | Example 29 | Example 30 | Example 31 | Example 32 | Example 33 | Example 34 |
|---|---|---|---|---|---|---|---|---|
| Water contact angle (°) | 103 | 103 | 103 | 103 | 103 | 103 | 103 | 103 |
| Discharge amount [W/(m²/min.)] | 7.4 | 7.4 | 7.4 | 7.4 | 7.4 | 7.4 | 7.4 | 7.4 |
| Ratio of absorption peak heights by ATR-IR measurement | 0.0060 | 0.0060 | 0.0060 | 0.0060 | 0.0060 | 0.0060 | 0.0060 | 0.0060 |
| Indentation elastic modulus (N/mm²) | 31882 | 31882 | 31882 | 32335 | 32991 | 31747 | 32019 | 31985 |
| Heat shrinkage rate at 130°C (%) | 28 | 28 | 28 | 28 | 28 | 28 | 28 | 28 |
| Dry adhesive force (N/m) pressurization condition 1 | 1.5 | 1.8 | 1.4 | 1.5 | 1.5 | 1.6 | 1.5 | 1.5 |
| Dry adhesive force (N/m) pressurization condition 2 | 1.5 | 1.6 | 1.6 | 1.4 | 1.5 | 1.7 | 1.6 | 1.5 |
| Dry adhesive force (N/m) pressurization condition 3 | 1.7 | 2.5 | 2.3 | 1.9 | 2.0 | 2.2 | 2.2 | 1.7 |
| Injection completion time (min) pressurization condition 1 | 5 | 5 | 5 | 6 | 8 | 12 | 15 | 18 |
| Injection completion time (min) pressurization condition 2 | 5 | 4 | 5 | 6 | 9 | 11 | 15 | 18 |
| Injection completion time (min) pressurization condition 3 | 5 | 4 | 5 | 6 | 8 | 12 | 15 | 18 |
| Cycle characteristic (%) | 65 | 65 | 65 | 66 | 65 | 66 | 66 | 65 |
| Cycle characteristic (evaluation) | A | A | A | A | A | A | A | A |

[Table 4-8]

| | Example 35 | Example 36 | Example 37 |
|---|---|---|---|
| Polyolefin microporous membrane type | 1A | 1A | 1A |
| Heat setting temperature in manufacturing of polyolefin microporous membrane (°C) | 132 | 132 | 132 |
| Thickness of polyolefin microporous membrane ($\mu$m) | 12 | 12 | 12 |
| Basis weight of polyolefin microporous membrane (g/m$^2$) | 6.3 | 6.3 | 6.3 |
| Porosity of polyolefin microporous membrane (%) | 44 | 44 | 44 |
| Thickness of inorganic coating layer ($\mu$m) | - | - | - |
| $R_{expose}$ (area%) | 85.3 | 85.3 | 85.3 |
| Total coverage area ratio of thermoplastic resin layer of first coating layer (area%) | 14.7 | 14.7 | 14.7 |
| Total coverage area ratio of thermoplastic resin layer of second coating layer (area%) | - | - | - |
| Coating solution for formation of thermoplastic resin layer | Acrylic polymer 2 | Acrylic polymer 3 | PVDF |
| Water contact angle (°) | 103 | 103 | 103 |
| Discharge amount [W/(m$^2$/min.)] | 7.4 | 7.4 | 7.4 |
| Ratio of absorption peak heights by ATR-IR measurement | 0.0060 | 0.0060 | 0.0060 |
| Indentation elastic modulus (N/mm$^2$) | 31894 | 32328 | 32991 |
| Heat shrinkage rate at 130°C (%) | 28 | 28 | 28 |
| Dry adhesive force (N/m) pressurization condition 1 | 1.5 | 1.5 | 1.5 |
| Dry adhesive force (N/m) pressurization condition 2 | 1.6 | 1.5 | 1.5 |
| Dry adhesive force (N/m) pressurization condition 3 | 2.3 | 2.4 | 2.3 |
| Injection completion time (min) pressurization condition 1 | 8 | 8 | 9 |
| Injection completion time (min) pressurization condition 2 | 8 | 8 | 8 |
| Injection completion time (min) pressurization condition 3 | 8 | 8 | 9 |
| Cycle characteristic (%) | 65 | 66 | 65 |
| Cycle characteristic (evaluation) | A | A | A |

[Table 4-9]

| | Example 38 | Example 39 | Example 40 | Example 41 | Example 42 | Example 43 | Example 44 | Comparative Example 21 |
|---|---|---|---|---|---|---|---|---|
| Polyolefin microporous membrane type | 1A | 1A | 1A | 1A | 1A | 1A | 1A | 1A |
| Heat setting temperature in manufacturing of polyolefin microporous membrane (°C) | 132 | 132 | 132 | 132 | 132 | 132 | 132 | 132 |

(continued)

| | Example 38 | Example 39 | Example 40 | Example 41 | Example 42 | Example 43 | Example 44 | Comparative Example 21 |
|---|---|---|---|---|---|---|---|---|
| Thickness of polyolefin microporous membrane ($\mu$m) | 12 | 12 | 12 | 12 | 12 | 12 | 12 | 12 |
| Basis weight of polyolefin microporous membrane (g/m$^2$) | 6.3 | 6.3 | 6.3 | 6.3 | 6.3 | 6.3 | 6.3 | 6.3 |
| Porosity of polyolefin microporous membrane (%) | 44 | 44 | 44 | 44 | 44 | 44 | 44 | 44 |
| Thickness of inorganic coating layer ($\mu$m) | 2 | 2 | 2 | 2 | 2 | 2 | 2 | 2 |
| $R_{expose}$ (area%) | 100 | 95.4 | 100 | 95.4 | 100 | 100 | 100 | 100 |
| Total coverage area ratio of thermoplastic resin layer of first coating layer (area%) | - | 4.6 | - | 4.6 | - | - | - | - |
| Total coverage area ratio of thermoplastic resin layer of second coating layer (area%) | - | - | 55 | 55 | - | 55 | - | - |
| Coating solution for formation of thermoplastic resin layer | - | - | Acrylic polymer 1 | Acrylic polymer 1 | - | Acrylic polymer 1 | - | - |
| Water contact angle (°) | 102 | 101 | 101 | 102 | 102 | 101 | 102 | 118 |
| Discharge amount [W/(m$^2$/min.)] | 7.4 | 7.4 | 7.4 | 7.4 | 7.4 | 7.4 | 7.4 | 7.4 |
| Ratio of absorption peak heights by ATR-IR measurement | 0.0060 | 0.0060 | 0.0060 | 0.0060 | 0.0060 | 0.0060 | 0.0060 | 0.0000 |
| Indentation elastic modulus (N/mm$^2$) | 32665 | 31773 | 31845 | 32589 | - | - | 32665 | 32665 |

(continued)

| | Example 38 | Example 39 | Example 40 | Example 41 | Example 42 | Example 43 | Example 44 | Comparative Example 21 |
|---|---|---|---|---|---|---|---|---|
| Heat shrinkage rate at 130°C (%) | 0 | 0 | 0 | 0 | - | - | 0 | 0 |
| Dry adhesive force (N/m) pressurization condition 1 | 1.4 | 1.4 | 1.5 | 1.5 | - | - | 1.3 | 0.7 |
| Dry adhesive force (N/m) pressurization condition 2 | 1.4 | 1.4 | 1.6 | 1.5 | - | - | 1.4 | 0.6 |
| Dry adhesive force (N/m) pressurization condition 3 | 1.9 | 1.8 | 1.8 | 1.8 | - | - | 2.0 | 1.1 |
| Injection completion time (min) pressurization condition 1 | 3 | 3 | 3 | 3 | - | - | 3 | 6 |
| Injection completion time (min) pressurization condition 2 | 3 | 3 | 3 | 3 | - | - | 3 | 7 |
| Injection completion time (min) pressurization condition 3 | 3 | 3 | 3 | 3 | - | - | 3 | 8 |
| Cycle characteristic (%) | 69 | 69 | 88 | 95 | - | - | 89 | 53 |
| Cycle characteristic (evaluation) | A | A | S | S | - | - | S | C |

**Claims**

1. A separator for a power storage device comprising

   a polyolefin microporous membrane including a first main surface and a second main surface, wherein
   a water contact angle of the first main surface is 43° or more and 118° or less, and,
   when measurement of absorbance in 600 $cm^{-1}$ or more and 4,000 $cm^{-1}$ or less is carried out on the first main surface by ATR-IR measurement, a ratio between an absorption peak height in 1,715 $cm^{-1}$ and an absorption peak height in 1,472 $cm^{-1}$ is 0.0020 or more and 0.0280 or less, and a porosity of the polyolefin microporous membrane is 30% or more and 65% or less.

2. The separator for a power storage device according to claim 1, wherein
   an indentation elastic modulus of the first main surface is 10,000 $N/mm^2$ or more and 55,000 $N/mm^2$ or less.

3. A separator for a power storage device comprising

a polyolefin microporous membrane including a first main surface and a second main surface, wherein
a water contact angle of the first main surface is 43° or more and 118° or less,
at a time of observation from above in a vertical direction on a side opposite to the second main surface with respect to the first main surface, when a proportion of exposure of a region satisfying the water contact angle in the first main surface of 43° or more and 118° or less is set as $R_{expose}$, the $R_{expose}$ is 34 area% or more and less than 100 area%,
a first coating layer is provided on the first main surface, and
a porosity of the polyolefin microporous membrane is 30% or more and 65% or less.

4. The separator for a power storage device according to claim 3, wherein
an indentation elastic modulus of the first main surface is 10,000 $N/mm^2$ or more and 55,000 $N/mm^2$ or less.

5. The separator for a power storage device according to claim 1 or 3, wherein,
when measurement of absorbance in 600 $cm^{-1}$ or more and 4,000 $cm^{-1}$ or less is carried out on the first main surface by ATR-IR measurement, a ratio between an absorption peak height in 1,715 $cm^{-1}$ and an absorption peak height in 1,472 $cm^{-1}$ is 0.0020 or more and 0.0130 or less.

6. The separator for a power storage device according to claim 3 or 4, wherein
a total coverage area ratio of the first coating layer to the first main surface exceeds 0 area% and is 66 area% or less.

7. The separator for a power storage device according to claim 3 or 4, wherein
the first coating layer is a thermoplastic resin layer.

8. The separator for a power storage device according to claim 3 or 4, wherein
a thermoplastic resin included in the first coating layer is a particulate polymer.

9. The separator for a power storage device according to claim 3 or 4, wherein

a second coating layer is provided on the second main surface, and
the second coating layer is at least one of an inorganic coating layer, a thermoplastic resin layer, and a mixed layer of an inorganic filler and a thermoplastic resin in a proportion of 3:7 to 7:3 at a weight ratio.

10. The separator for a power storage device according to claim 3 or 4, wherein
an inorganic coating layer and a thermoplastic resin layer are provided on a side of the second main surface with reference to the polyolefin microporous membrane.

11. The separator for a power storage device according to claim 9, wherein
a thermoplastic resin included in the second coating layer is a particulate polymer.

12. The separator for a power storage device according to claim 1 or 3, wherein
the separator for a power storage device does not include an inorganic coating layer on the first main surface.

13. The separator for a power storage device according to claim 1 or 3, wherein
the first main surface is to be in contact with or opposite to a negative electrode.

14. The separator for a power storage device according to claim 1 or 3, wherein
the second main surface is to be in contact with or opposite to a positive electrode.

15. The separator for a power storage device according to claim 13, wherein
the separator for a power storage device does not include an inorganic coating layer on the first main surface.

16. The separator for a power storage device according to claim 15, wherein
a water contact angle of the first main surface is 95° or more and 110° or less.

17. A power storage device comprising
the separator for a power storage device according to claim 13.

**18.** The separator for a power storage device according to claim 1 or 3, wherein

the separator for a power storage device does not include an inorganic coating layer on the first main surface, and the first main surface is to be in contact with or opposite to a negative electrode.

**19.** A power storage device comprising
the separator for a power storage device according to claim 18.

**20.** A method for manufacturing a power storage device comprising steps (1) to (5) below:

(1) preparing a separator for a power storage device including a polyolefin microporous membrane including a first main surface and a second main surface, wherein

a water contact angle of the first main surface is 43° or more and 118° or less, and, when measurement of absorbance in 600 $cm^{-1}$ or more and 4,000 $cm^{-1}$ or less is carried out on the first main surface by ATR-IR measurement, a ratio between an absorption peak height in 1,715 $cm^{-1}$ and an absorption peak height in 1,472 $cm^{-1}$ is 0.0020 or more and 0.0280 or less, and a porosity of the polyolefin microporous membrane is 30% or more and 65% or less;

(2) acquiring a wound body by laminating the separator in an order of positive electrode-separator-negative electrode-separator or negative electrode-separator-positive electrode-separator and winding into a circular or flat spiral shape, or a step of acquiring a laminated body acquired by lamination in a flat plate shape in an order of positive electrode-separator-negative electrode-separator or negative electrode-separator-positive electrode-separator;
(3) heating and/or pressing the wound body or the laminated body;
(4) housing the wound body or the laminated body in a battery can; and
(5) injecting an electrolyte solution into the battery can.

**21.** A method for manufacturing a power storage device comprising steps (1) to (5) below:

(1) preparing a separator for a power storage device including a polyolefin microporous membrane including a first main surface and a second main surface, wherein

a water contact angle of the first main surface is 43° or more and 118° or less,
at a time of observation from above in a vertical direction on a side opposite to the second main surface with respect to the first main surface, when a proportion of exposure of a region satisfying the water contact angle in the first main surface of 43° or more and 118° or less is set as $R_{expose}$, the $R_{expose}$ is 34 area% or more and less than 100 area%,
a first coating layer is provided on the first main surface, and
a porosity of the polyolefin microporous membrane is 30% or more and 65% or less;

(2) acquiring a wound body by laminating the separator in an order of positive electrode-separator-negative electrode-separator or negative electrode-separator-positive electrode-separator and winding into a circular or flat spiral shape, or a step of acquiring a laminated body acquired by lamination in a flat plate shape in an order of positive electrode-separator-negative electrode-separator or negative electrode-separator-positive electrode-separator;
(3) heating and/or pressing the wound body or the laminated body;
(4) housing the wound body or the laminated body in a battery can; and
(5) injecting an electrolyte solution into the battery can.

## INTERNATIONAL SEARCH REPORT

| International application No. |
|---|
| **PCT/JP2023/046961** |

**A.    CLASSIFICATION OF SUBJECT MATTER**

*H01M 50/417*(2021.01)i; *H01G 11/52*(2013.01)i; *H01M 50/434*(2021.01)i; *H01M 50/443*(2021.01)i; *H01M 50/446*(2021.01)i; *H01M 50/451*(2021.01)i; *H01M 50/457*(2021.01)i; *H01M 50/46*(2021.01)i; *H01M 50/489*(2021.01)i; *H01M 50/491*(2021.01)i

FI:    H01M50/417; H01G11/52; H01M50/434; H01M50/443 B; H01M50/443 E; H01M50/443 M; H01M50/446; H01M50/451; H01M50/457; H01M50/46; H01M50/489; H01M50/491

According to International Patent Classification (IPC) or to both national classification and IPC

**B.    FIELDS SEARCHED**

Minimum documentation searched (classification system followed by classification symbols)

H01M50/417; H01G11/52; H01M50/434; H01M50/443; H01M50/446; H01M50/451; H01M50/457; H01M50/46; H01M50/489; H01M50/491

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2019-073590 A (JNC CORP.) 16 May 2019 (2019-05-16) | 1-21 |
| A | JP 2016-081621 A (TDK CORPORATION) 16 May 2016 (2016-05-16) | 1-21 |
| A | JP 2018-195564 A (ASAHI KASEI CORP.) 06 December 2018 (2018-12-06) | 1-21 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **12 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2023/046961** |

| **Box No. III** | **Observations where unity of invention is lacking (Continuation of item 3 of first sheet)** |
| --- | --- |

This International Searching Authority found multiple inventions in this international application, as follows:

(Invention 1) Claims 1-2, 5, and 12-20

The invention in claim 1 is found to have the special technical feature of "when light absorbance at 600 cm$^{-1}$ to 4000 cm$^{-1}$ of the first main surface is measured by ATR-IR measurement, the ratio of the absorption peak height at 1715 cm$^{-1}$ and the absorption peak height at 1472 cm$^{-1}$ is 0.0020 to 0.0280". The inventions in claims 2, 5, and 12-19 depending from claim 1, and also the invention in claim 20 having the same special technical feature as claim 1 are classified as invention 1.

(Invention 2) Claims 3-4, 6-11, and 21

The invention in claim 3 shares, with claim 1 classified as invention 1, the feature of "a power storage device separator comprising a microporous polyolefin membrane having a first main surface and a second main surface, wherein the water contact angle of the first main surface is 43°-118°, and the porosity of the microporous polyolefin membrane is 30%-65%". However, this feature does not make a contribution over the prior art in the light of the content disclosed in JP 2019-073590 A, and thus cannot be said to be a special technical feature. Furthermore, there are no other identical or corresponding special technical features among these inventions.

Additionally, claim 3 does not depend from claim 1, and is not substantially identical to or similarly closely related to any of the claims classified as invention 1. Thus, claim 3 cannot be classified as invention 1.

Claim 3 is classified as invention 2 as a result of having the special technical feature of "when the first main surface is observed from above in the vertical direction on the side opposite to the second main surface, and the proportion of exposure of a region where the water contact angle in the first main surface satisfies 43°-118° is noted as Rexpose, the Rexpose is at least 34 area% to 100 area%, and the top of the first main surface has a first coating layer".

The inventions in claims 4 and 6-11 depending from claim 3, and also the invention in claim 21 having the same special technical feature as claim 3 are classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2023/046961**

| Patent document cited in search report | | | Publication date (day/month/year) | Patent family member(s) | Publication date (day/month/year) |
|---|---|---|---|---|---|
| JP | 2019-073590 | A | 16 May 2019 | (Family: none) | |
| JP | 2016-081621 | A | 16 May 2016 | (Family: none) | |
| JP | 2018-195564 | A | 06 December 2018 | (Family: none) | |

Form PCT/ISA/210 (patent family annex) (July 2022)

**EP 4 645 567 A1**

**Patent documents cited in the description**

- WO 2014017651 A